(19) Europäisches Patentamt
European Patent Office
Office européen des brevets

(11) **EP 4 285 719 A1**

(12) **EUROPEAN PATENT APPLICATION**
published in accordance with Art. 153(4) EPC

(43) Date of publication:
06.12.2023 Bulletin 2023/49

(21) Application number: 21923239.4

(22) Date of filing: 22.12.2021

(51) International Patent Classification (IPC):
*A01M 1/20* (2006.01)     *B32B 27/18* (2006.01)
*B32B 27/32* (2006.01)     *A01P 7/04* (2006.01)
*C08K 5/10* (2006.01)      *C08L 23/08* (2006.01)
*A01N 53/06* (2006.01)     *A01N 25/10* (2006.01)

(52) Cooperative Patent Classification (CPC):
A01M 1/20; A01N 25/10; A01N 53/00; A01P 7/04;
B32B 27/18; B32B 27/32; C08K 5/10; C08L 23/08

(86) International application number:
PCT/JP2021/047682

(87) International publication number:
WO 2022/163236 (04.08.2022 Gazette 2022/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.01.2021  JP 2021010492

(71) Applicant: SUMITOMO CHEMICAL COMPANY,
LIMITED
Tokyo 103-6020 (JP)

(72) Inventors:
• OGAWA, Ayumu
  Ichihara-shi, Chiba 299-0195 (JP)
• ICHIMIYA, Takaya
  Ichihara-shi, Chiba 299-0195 (JP)

(74) Representative: Vossius & Partner
Patentanwälte Rechtsanwälte mbB
Siebertstraße 3
81675 München (DE)

(54) **RESIN COMPOSITION AND MEMBER, LAMINATE, AND SUSTAINED RELEASE INSECT REPELLENT PREPARATION CONTAINING SAID RESIN COMPOSITION**

(57) The present invention provides a resin composition comprising at least a resin (A), which is a copolymer of ethylene and a vinyl-based monomer containing an oxygen atom, a linear or branched carboxylic acid ester (B) having a molecular weight of 255 to 380 and a saturated vapor pressure of $1.0 \times 10^{-4}$ Pa or more at 25°C, and an insecticide (C) having a saturated vapor pressure of $1.0 \times 10^{-4}$ Pa or more at 25°C, wherein the amount of the resin (A) is 10 to 87% by mass, the amount of the carboxylic acid ester (B) is 3 to 30% by mass, and the amount of the insecticide (C) is 10 to 600 by mass, based on the total amount of the resin composition, and the mass ratio of the carboxylic acid ester (B) to the insecticide (C) is 2:1 to 1:5.

**Description**

[Technical Field]

The present invention relates to a resin composition, and a member, a laminate and a sustained release insecticide preparation including the resin composition.

[Background Art]

There have hitherto been known a resin composition comprising an insecticide which is volatile at normal temperature and an additive in a resin, and a molded body thereof. For example, Patent Document 1 mentions a resin composition comprising a pyrethroid compound, a synergist and a thermoplastic resin. Patent Document 2 mentions a resin composition comprising a resin, an active compound such as an insecticide, a transpirable plasticizer having a vapor pressure of 0.001 mmHg or more at 20°C, and a bleeding accelerator.

[Prior Art Document]

[Patent Document]

[Patent Document 1] JP 2011-149000 A
[Patent Document 2] JP 2005-320550 A

[Disclosure of the Invention]

[Problems to be Solved by the Invention]

In a resin composition comprising a volatile active ingredient in a resin, the efficacy is exhibited by volatilizing the active ingredient into the surrounding environment, but the concentration of the active ingredient in the resin composition gradually decreases over time. As the concentration decreases, a volatilization rate of the active ingredient decreases over time. Therefore, although the active ingredient remains in the resin composition, the efficacy of the active ingredient is insufficient, leading to a problem such as a decrease in effective period. Such a decrease in volatilization rate over time is particularly problematic when the saturated vapor pressure of the active ingredient is relatively high at $1.0 \times 10^{-4}$ Pa or more.

To increase the volatilization amount of the active ingredient, the concentration of the active ingredient in the resin composition may be increased. However, simply increasing the concentration of the active ingredient cannot effectively extend the effective period, and also bleeding is likely to occur on the product surface, resulting in poor appearance. When additives such as plasticizers are used in combination, bleeding of these additives may occur, resulting in poor appearance. In the present invention, the term "bleeding" is a phenomenon in which ingredients exuded from the resin composition, such as active ingredients and additives, do not volatilize from the surface of a molded body made of the resin composition, and remain on the surface as a liquid or solid.

Therefore, it is an object of the present invention to provide a resin composition which has a long effective period and is suitable for producing products which are less likely to cause bleeding on the surface by volatilizing the active ingredient at a high volatilization amount over a long period of time, and a member, a laminate and a sustained release insecticide preparation containing the resin composition.

[Means for Solving the Problems]

As a result of intensive study to solve the above problems, the present inventors have found that the above problems are solved by a resin composition comprising at least a resin (A), which is a copolymer of ethylene and a vinyl-based monomer containing an oxygen atom, a linear or branched carboxylic acid ester (B) having a molecular weight of 255 to 380 and a saturated vapor pressure of $1.0 \times 10^{-4}$ Pa or more at 25°C, and an insecticide (C) having a saturated vapor pressure of $1.0 \times 10^{-4}$ Pa or more at 25°C, wherein the amount of the resin (A) is 10 to 87% by mass, the amount of the carboxylic acid ester (B) is 3 to 30% by mass, and the amount of the insecticide (C) is 10 to 60% by mass, based on the total amount of the resin composition, and the mass ratio of the carboxylic acid ester (B) to the insecticide (C) is 2:1 to 1:5, thus completing the present invention.

That is, the present invention includes the following preferred aspects.

[1] A resin composition comprising at least a resin (A), which is a copolymer of ethylene and a vinyl-based monomer containing an oxygen atom, a linear or branched carboxylic acid ester (B) having a molecular weight of 255 to 380 and a saturated vapor pressure of $1.0 \times 10^{-4}$ Pa or more at 25°C, and an insecticide (C) having a saturated vapor pressure of $1.0 \times 10^{-4}$ Pa or more at 25°C, wherein the amount of the resin (A) is 10 to 87% by mass, the amount of the carboxylic acid ester (B) is 3 to 30% by mass, and the amount of the insecticide (C) is 10 to 60% by mass, based on the total amount of the resin composition, and the mass ratio of the carboxylic acid ester (B) to the insecticide (C) is 2:1 to 1:5.

[2] The resin composition according to [1], wherein the resin (A) is a copolymer of ethylene and an organic carboxylic acid derivative having an ethylenically unsaturated bond.

[3] The resin composition according to [1] or [2], wherein the carboxylic acid ester (B) is at least one ingredient selected from the group consisting of an ester of a saturated fatty acid having 8 to 20 carbon atoms, an ester of a dicarboxylic acid having 2 to 8 carbon atoms, a carbonic acid ester, a citric acid ester and an acetylcitric acid ester.

[4] The resin composition according to any one of [1] to [3], wherein the insecticide (C) is a pyrethroid insecticide.

[5] The resin composition according to [4], wherein the insecticide (C) is at least one ingredient selected from the group consisting of transfluthrin, metofluthrin, empenthrin, profluthrin, meperfluthrin and heptafluthrin.

[6] The resin composition according to any one of [1] to [5], wherein the saturated vapor pressure (Pb) at 25°C of the carboxylic acid ester (B) and the saturated vapor pressure (Pc) at 25°C of the insecticide (C) satisfy formula (1) below.

$$0.2 \leq Pb/Pc \leq 500 \qquad (1)$$

[7] The resin composition according to any one of [1] to [6], wherein a solubility index ($R_1$) of the resin (A) and the carboxylic acid ester (B), a solubility index ($R_2$) of the resin (A) and insecticide (C), and a solubility index ($R_3$) of the carboxylic acid ester (B) and the insecticide (C) are all 5.0 or less.

[8] A member for a sustained release insecticide preparation, comprising the resin composition according to any one of [1] to [7].

[9] A laminate comprising a first layer (D) containing the resin composition according to any one of [1] to [7], and a second layer (E) having the permeability to the carboxylic acid ester (B) and the insecticide (C).

[10] The laminate according to [9], wherein the first layer (D) is a single layer, the second layer (E) is a single layer or a multilayer, and one surface of the second layer (E) is in contact with the first layer (D) and the other surface of the second layer (E) is an outermost surface of the laminate.

[11] The laminate according to [9] to [10], which has at least layer constitution of layer (E)/layer (D)/layer (E), wherein each layer (E) may be the same or different from each other.

[12] The laminate according to any one of [9] to [11], further comprising a third layer (F) which is different from the layer (E) and the layer (D).

[13] The laminate according to [12], wherein the third layer (F) is at least one layer selected from the group consisting of an adhesive layer, a surface protective layer, a colored layer, an insecticide permeable barrier layer, a design layer and an ultraviolet absorbing layer.

[14] A sustained release insecticide preparation comprising the member according to [8] and/or the laminate according to any one of [9] to [13].

[Effects of the Invention]

According to the present invention, it is possible to provide a resin composition which has a long effective period and is suitable for producing products which are less likely to cause bleeding on the surface by volatilizing the active ingredient at a high volatilization amount over a long period of time, and a member, a laminate and a sustained release insecticide preparation containing the resin composition.

[Brief Description of the Drawings]

FIG. 1 is a graph showing a change in active ingredient concentration retention rate over time for laminates shown in Examples and Comparative Examples.
FIG. 2 is a graph showing a change in active ingredient sustained release amount over time for laminates shown in Examples and Comparative Examples.

[Mode for Carrying Out the Invention]

Hereinafter, embodiments of the present invention will be described in detail. The scope of the present invention is not limited to the embodiments described herein, and various modifications can be made without departing from the scope of the present invention.

The resin composition of the present invention is a resin composition comprising at least a resin (A), which is a copolymer of ethylene and a vinyl-based monomer containing an oxygen atom, a linear or branched carboxylic acid ester (B) having a molecular weight of 255 to 380 and a saturated vapor pressure of $1.0 \times 10^{-4}$ Pa or more at 25°C, and an insecticide (C) having a saturated vapor pressure of $1.0 \times 10^{-4}$ Pa or more at 25°C, wherein the amount of the resin (A) is 10 to 87% by mass, the amount of the carboxylic acid ester (B) is 3 to 30% by mass, and the amount of the insecticide (C) is 10 to 60% by mass, based on the total amount of the resin composition, and the mass ratio of the carboxylic acid ester (B) to the insecticide (C) is 2:1 to 1:5. Here, the resin (A) is a matrix resin of the resin composition, the carboxylic acid ester (B) is a plasticizer having volatility, and the insecticide (C) is an active ingredient in the resin composition. As used herein, "carboxylic acid ester (B)" is also referred to as "plasticizer (B)".

According to the resin composition in which the resin (A), the carboxylic acid ester (B) and the insecticide (C) are included so that the amount of the resin (A) is 10 to 87% by mass, the amount of the carboxylic acid ester (B) is 3 to 30% by mass, and the amount of the insecticide (C) is 10 to 60% by mass, based on the total amount of the resin composition, and the mass ratio of the carboxylic acid ester (B) to the insecticide (C) is 2:1 to 1:5, it is possible to volatilize the insecticide (C) as the active ingredient in high volatilization amount over a long period of time, and to suppress bleeding of the carboxylic acid ester (B) and the insecticide (C) on the product surface.

The resin (A) which is a copolymer of ethylene and a vinyl-based monomer containing an oxygen atom, and the carboxylic acid ester (B) are ingredients which are highly compatible with each other, and the resin composition including these ingredients and the agent (C) at the above ratio can retain a large amount of the carboxylic acid ester (B) and the insecticide (C) in the resin (A), or can retain a large amount of the insecticide (C) in the mixture of the resin (A) and the carboxylic acid ester (B). It is considered that when the insecticide (C) volatilizes, the carboxylic acid ester (B) simultaneously volatilizes at a rate close to that of the insecticide (C). As a result, it is possible to slow down the concentration decrease rate of the insecticide (C) in the resin composition due to volatilization of the insecticide (C) from the resin composition, thus making it possible to suppress a decrease in volatilization amount of the insecticide (C) over time. It is considered that it is also possible to volatilize the insecticide (C) as the active ingredient in a high volatilization amount over a long period of time, and to suppress bleeding of the carboxylic acid ester (B) and the insecticide (C) on the product surface.

The amount of the resin (A) included in the resin composition of the present invention is 10 to 87% by mass based on the total amount of the resin composition. When the amount of the resin (A) is less than 10% by mass, insufficient solubility in the carboxylic acid ester (B) and the insecticide (C) makes it difficult to retain these ingredients in the resin composition, thus failing to suppress bleeding. When the amount of the resin (A) exceeds 87% by mass, the amounts of the carboxylic acid ester (B) and the insecticide (C) included in the resin composition decrease, thus failing to obtain sufficient effective period. From the viewpoint of easily suppressing bleeding and easily enhancing the shape retention as desired, the amount of the resin (A) is preferably 20% by mass or more, more preferably 30% by mass or more, and still more preferably 40% by mass or more, based on the total amount of the resin composition. Meanwhile, from the viewpoints of increasing the contents of the carboxylic acid ester (B) and the insecticide (C) in the resin composition and easily improving the effective period, the amount of the resin (A) is preferably 85% by mass or less, more preferably 75% by mass or less, and still more preferably 60% by mass or less.

The amount of the carboxylic acid ester (B) included in the resin composition of the present invention is 3 to 30% by mass based on the total amount of the resin composition. When the amount of the carboxylic acid ester (B) is less than 3% by mass, the concentration decrease rate of the insecticide (C) cannot be decreased, thus failing to suppress a decrease in volatilization amount of the insecticide (C) per unit surface area over time. Meanwhile, when the amount of the carboxylic acid ester (B) exceeds 30% by mass, physical properties (for example, dimensional stability) of the resin composition deteriorate, which makes it difficult to retain the shape. The amount of the carboxylic acid ester (B) is preferably 5% by mass or more, and more preferably 10% by mass or more, from the viewpoint of easily suppressing a decrease in volatilization amount of the insecticide (C) over time. The amount of the carboxylic acid ester (B) is preferably 25% by mass or less, and more preferably 20% by mass or less, from the viewpoint of easily improving the physical properties of the resin composition.

The amount of the insecticide (C) included in the resin composition of the present invention is 10 to 60% by mass based on the total amount of the resin composition. When the amount of the insecticide (C) is less than 10% by mass, the initial volatilization amount of the insecticide (C) is insufficient and also the effective period is insufficient. Meanwhile, when the amount of the insecticide (C) exceeds 60% by mass, the insecticide (C) bleeds significantly from the resin composition. The amount of the insecticide (C) is preferably 15% by mass or more, more preferably 20% by mass or more, still more preferably 25% by mass or more, and yet more preferably 30% by mass or more, from the viewpoint of easily improving the volatilization amount and effective period of the insecticide (C). The amount of the insecticide (C) is preferably 50% by mass or less, and more preferably 40% by mass or less, from the viewpoint of easily suppressing bleeding in the resin composition. From the viewpoint of easily enhancing the compatibility with the resin (A) and the carboxylic acid ester (B), the insecticide (C) is preferably at least one selected from the group consisting of pyrethroid insecticides, organophosphorus insecticides, carbamate insecticides, juvenile hormone-like insecticides, p-menthane-3,8-diol, N,N-diethyl-m-toluamide (DEET), carane-3,4-diol, p-dichlorobenzene and camphor, and more preferably at least one selected from the group consisting of pyrethroid insecticides.

The mass ratio of the carboxylic acid ester (B) to the insecticide (C) included in the resin composition of the present invention is 2:1 to 1:5 (carboxylic acid ester (B):insecticide (C)). When the amount of the carboxylic acid ester (B) exceeds twice the amount of the insecticide (C), the amount of the insecticide volatilized at the initial stage of volatilization is insufficient, thus failing to obtain the insecticidal effect. Meanwhile, when the amount of the insecticide (C) exceeds five times the amount of the carboxylic acid ester (B), it is impossible to obtain the effect of suppressing the concentration decrease of the insecticide (C). The mass ratio of the carboxylic acid ester (B) to the insecticide (C) is preferably 3:2 to 1:5, more preferably 1:1 to 1:5, still more preferably 4:5 to 1:4, yet more preferably 3:4 to 1:3, and particularly preferably 2:3 to 1:2.

The resin composition of the present invention include one or more resins (A), one or more carboxylic acid esters (B), and one or more insecticides (C) at the above mass range and mass ratio. The present resin composition may include ingredients other than the resin (A), the carboxylic acid ester (B) and the insecticide (C). From the viewpoint of easily increasing the sustained release mass of the insecticide (C) and increasing the efficacy of the insecticide (C) as the active ingredient, the total mass of the resin (A), the carboxylic acid ester (B) and the insecticide (C) included in the present resin composition is preferably 40% by mass or more, more preferably 50% by mass or more, still more preferably 55% by mass or more, yet more preferably 60% by mass, further preferably 70% by mass or more, still further preferably 80% by mass or more, and most preferably 90% by mass or more, based on the total amount of the present resin composition. The total amount of the resin (A), the carboxylic acid ester (B) and the insecticide (C) included in the present resin composition may be 100% by mass or less based on the total amount of the present resin composition.

The resin composition of the present invention includes a resin (A) which is a copolymer of ethylene and a vinyl-based monomer containing an oxygen atom. The resin (A) is a copolymer of ethylene and a vinyl-based monomer containing an oxygen atom, and can be appropriately selected according to the compatibility with the plasticizer (B) and the insecticide (C), and physical properties required for a member, a laminate and a product containing the resin composition of the present invention. Examples of the resin (A) include copolymers of ethylene and an organic carboxylic acid derivative having an ethylenically unsaturated bond, such as an ethylene-vinyl acetate copolymer and an ethylene-(meth)acrylic acid ester copolymer (ethylene-methyl acrylate copolymer and/or ethylene-methyl methacrylate copolymer), and ethylene-vinyl alcohol copolymers. As the resin (A), a resin may be used alone, or two or more resins may be used in combination. From the viewpoint of easily enhancing the effect of suppressing bleeding of the carboxylic acid ester (B) and the insecticide (C), the amount of a structural unit derived from a vinyl-based monomer containing an oxygen atom which constitutes the resin (A) is preferably 5 to 50% by weight, more preferably 10 to 50% by weight, still more preferably 20 to 50% by weight, yet more preferably 30 to 50% by weight, and particularly preferably 30 to 40% by mass.

The resin (A) is preferably a resin having high molecular chain mobility, a resin having low glass transition temperature or the like from the viewpoint of easily increasing the volatilization rate of the insecticide (C). From this point of view, the glass transition temperature of the resin (A) is preferably 30°C or lower, and more preferably 0°C or lower. From the viewpoint of suppressing deactivation of the insecticide (C), the resin (A) is preferably a resin which does not cause a chemical reaction with the insecticide (C). From the viewpoint of easily controlling the solubility and diffusibility of the insecticide (C) over a wide range, the resin (A) is preferably a thermoplastic resin, and more preferably a thermoplastic resin which can be molded at a temperature lower than the decomposition temperature of the insecticide (C) or the boiling point of the insecticide (C). When the resin (A) is a thermoplastic resin which can be molded at a temperature lower than the decomposition temperature or the boiling point of the insecticide (C), it is easy to suppress disappearance of the insecticide (C) due to decomposition or volatilization during processing of the resin composition.

The resin (A) is preferably a copolymer of ethylene and an organic carboxylic acid derivative having an ethylenically unsaturated bond, from the viewpoints of easily increasing the volatilization rate of the insecticide (C) and easily suppressing bleeding of the carboxylic acid ester (B) and the insecticide (C). The organic carboxylic acid derivative having an ethylenically unsaturated bond is preferably selected from the group consisting of vinyl acetate, a methacrylic acid ester and an acrylic acid ester, still more preferably selected from a methacrylic acid ester and/or an acrylic acid ester, yet more preferably selected from an alkyl methacrylate and/or an alkyl acrylate, and particularly preferably selected from methyl methacrylate and/or methyl acrylate. In this case, from the viewpoint of easily enhancing the effect of suppressing bleeding of the carboxylic acid ester (B) and the insecticide (C), the amount of the structural unit derived from an organic carboxylic acid derivative having an ethylenically unsaturated bond which constitutes the resin (A) is preferably 5 to 50% by weight, more preferably 10 to 50% by weight, still more preferably 20 to 50% by weight, and yet more preferably 30 to 40% by weight, based on the total weight of resin (A).

The weight-average molecular weight of the resin (A) is preferably 5,000 to 1,000,000, more preferably 10,000 to 500,000, still more preferably 30,000 to 400,000, yet more preferably 30,000 to 300,000, particularly preferably 30,000 to 150,000, more particularly preferably 30,000 to 70,000, and most preferably 30,000 to 50,000, from the viewpoint of easily increasing the volatilization amount of the insecticide (C) per unit surface area of the product. The weight-average molecular weight of the resin (A) is measured by gel permeation chromatography (GPC). As the measurement conditions, the conditions mentioned in Examples may be used.

The melting temperature of the resin (A) is preferably 0 to 180°C, more preferably 10 to 150°C, still more preferably 15 to 120°C, yet more preferably 20 to 100°C, further preferably 20 to 80°C, and still further preferably 20 to 65°C, from the viewpoints of easily suppressing volatilization during processing of the carboxylic acid ester (B) and the insecticide (C) and easily performing shape retention of the resin composition. The melting temperature of resin (A) is measured according to JIS K7215-2012.

The flexural rigidity of the resin (A) is preferably 0.001 to 4,000 MPa, more preferably 0.001 to 2,500 MPa, still more preferably 0.01 to 500 MPa, yet more preferably 0.01 to 100 MPa, further preferably 0.01 to 20 MPa, still further preferably 0.01 to 15 MPa, and most preferably 0.01 to 10 MPa, from the viewpoints of easily increasing the volatilization amount of the insecticide (C) per unit surface area of the product and easily performing shape retention of the resin composition. The flexural modulus of resin (A) is measured according to ASTM D747-70.

The durometer D hardness of the resin (A) is preferably 1 to 70 MPa, more preferably 1 to 40 MPa, still more preferably 2 to 35 MPa, yet more preferably 5 to 30 MPa, further preferably 5 to 25 MPa, and still further preferably 10 to 20 MPa, from the viewpoints of easily increasing the volatilization amount of the insecticide (C) per unit surface area of the product and easily performing shape retention of the resin composition. Durometer D hardness of resin (A) is measured according to JIS K7215-1986.

The resin composition of the present invention includes a linear or branched carboxylic acid ester (B) having a molecular weight of 255 to 380 and a saturated vapor pressure of $1.0 \times 10^{-4}$ Pa or more at 25°C. As the carboxylic acid ester (B), a linear or branched carboxylic acid ester having a molecular weight of 255 to 380 and a saturated vapor pressure of $1.0 \times 10^{-4}$ Pa or more at 25°C may be used alone, or two or more carboxylic acid esters may be used. The carboxylic acid ester (B) has a linear or branched structure and has no cyclic structure. A linear or branched carboxylic acid ester indicates a carboxylic acid ester compound having a molecular structure in which these atoms are bonded in a chain without including the moiety in which the constituent atoms of the carboxylic acid ester are cyclically bonded.

The carboxylic acid ester (B) having the above saturated vapor pressure acts as a transpirable plasticizer in the resin composition of the present invention. By including the carboxylic acid ester (B), the motility of the insecticide (C) in the resin composition is easily enhanced and the volatilization amount of the insecticide (C) per unit surface area of the product is easily increased, and high volatilization amount of the insecticide (C) is easily maintained over a long period of time. When the molecular weight of the carboxylic acid ester (B) is less than 255, the volatility of the carboxylic acid ester (B) is too high relative to the volatility of the insecticide (C), thus failing to obtain the effect of suppressing a decrease in concentration of the insecticide (C). Meanwhile, when the molecular weight is more than 380, the volatility of the plasticizer (B) is too low relative to the volatility of the insecticide (C), thus failing to obtain the effect of suppressing a decrease in concentration of the insecticide (C). The molecular weight of the carboxylic acid ester (B) is preferably 260 or more, more preferably 270 or more, and still more preferably 280 or more. The molecular weight is preferably 370 or less, more preferably 360 or less, still more preferably 350 or less, and yet more preferably 320 or less.

The saturated vapor pressure ($P_B$) of the carboxylic acid ester (B) at 25°C is $1.0 \times 10^{-4}$ Pa or more, and preferably $1.0 \times 10^{-3}$ Pa or more. When the saturated vapor pressure ($P_B$) is less than $1.0 \times 10^{-4}$ Pa, the volatilization rate of the carboxylic acid ester (B) is too slow relative to the volatilization rate of the insecticide (C), thus failing to maintain high volatilization amount over a long period of time. When the saturated vapor pressure of the carboxylic acid ester (B) is the above lower limit or more, the carboxylic acid ester (B) easily volatilizes at a volatilization rate equivalent to that of the insecticide (C), and the insecticide (C) volatilizes from the resin composition and the carboxylic acid ester (B) easily volatilizes. As a result, the gradient of the decrease in concentration of the insecticide (C) in the resin composition due to volatilization of the insecticide (C) from the resin composition can be made gentle, thus making it possible to easily suppress a decrease in volatilization amount of the insecticide (C) per unit surface area of the product over time. The upper limit of the saturated vapor pressure ($P_b$) at 25°C of the carboxylic acid ester (B) is not particularly limited, but is preferably $1.0 \times 10^{5}$ Pa or less, more preferably $1.0 \times 10^{3}$ Pa or less, and still more preferably 10 Pa or less, from the viewpoint of the moldability of the resin composition. From the above point of view, the saturated vapor pressure of the plasticizer (B) at 25°C is preferably $1.0 \times 10^{-4}$ Pa to $1.0 \times 10^{5}$ Pa, more preferably $1.0 \times 10^{-4}$ Pa to $1.0 \times 10^{3}$ Pa, and still more preferably $1.0 \times 10^{-3}$ Pa to 10 Pa.

The carboxylic acid ester (B) has a structure in which carboxylic acid and an alcohol are ester-bonded. Examples of carboxylic acid constituting the carboxylic acid ester (B) include enanthic acid, caprylic acid, pelargonic acid, capric acid, lauric acid, myristic acid, pentadecyl acid, palmitic acid, oleic acid, linoleic acid, oxalic acid, malonic acid, succinic acid, glutaric acid, adipic acid, pimelic acid, suberic acid, azelaic acid, sebacic acid, citric acid, acetylcitric acid, carbonic acid and the like. From the viewpoint of easily enhancing the stability of the carboxylic acid ester (B) itself, a linear or branched carboxylic acid having no carbon-carbon double bond is preferable. From the viewpoint of preventing bleeding, the carboxylic acid constituting the carboxylic acid ester (B) is preferably selected from the group consisting of a linear or branched saturated fatty acid having 8 to 20 carbon atoms, a linear or branched dicarboxylic acid having 2 to 8 carbon atoms, carbonic acid, citric acid and acetylcitric acid, more preferably selected from the group consisting of a linear or branched saturated fatty acids having 8 to 16 carbon atoms, a linear or branched saturated fatty acids having 4 to 8 carbon atoms, citric acid and acetylcitric acid, still more preferably selected from the group consisting of caprylic acid, isononanoic acid, capric acid, lauric acid, myristic acid, palmitic acid, adipic acid, sebacic acid, citric acid and acetylcitric acid, particularly preferably lauric acid, myristic acid, adipic acid, sebacic acid or acetylcitric acid, and yet more preferably selected from the group consisting of adipic acid, sebacic acid and acetylcitric acid.

From the viewpoint of preventing bleeding and moisture absorption, the alcohol constituting the carboxylic acid ester (B) is preferably a monohydric alcohol, more preferably a monohydric alcohol having 1 to 12 carbon atoms, still more preferably a monohydric saturated alcohol having 1 to 12 carbon atoms, yet more preferably an alcohol selected from the group consisting of ethanol, propanol, isopropanol, butanol, isobutanol, pentanol, hexanol, heptanol, octanol, ethylhexyl alcohol, nonanol, isononanol, decanol, 2-propylhexyl alcohol and dodecanol, further preferably an alcohol selected from the group consisting of ethanol, propanol, isopropanol, butanol, isobutanol, pentanol, hexanol, heptanol, octanol and ethylhexyl alcohol, and still further preferably an alcohol selected from the group consisting of ethanol, propanol, isopropanol, butanol, isobutanol, pentanol and hexanol.

From the viewpoint of preventing bleeding and moisture absorption, the carboxylic acid ester (B) is preferably at least one selected from the group consisting of an ester of a saturated fatty acid having 8 to 20 carbon atoms, an ester of a dicarboxylic acid having 2 to 8 carbon atoms, a carbonic acid ester, a citric acid ester and an acetylcitric acid ester, more preferably an ester of any of carboxylic acid of a linear or branched saturated fatty acid having 8 to 20 carbon atoms, a linear or branched dicarboxylic acid having 2 to 8 carbon atoms, carbonic acid, citric acid and acetylcitric acid, and a monohydric alcohol, still more preferably an ester of any of carboxylic acid of a linear or branched saturated fatty acid having 8 to 16 carbon atoms, a linear or branched dicarboxylic acid having 4 to 8 carbon atoms, citric acid and acetylcitric acid, and a monohydric saturated alcohol having 1 to 12 carbon atoms, and yet more preferably octyl caprylate, ethylhexyl caprylate, nonyl caprylate, isononyl caprylate, decyl caprylate, 2-propylhexyl caprylate, dodecyl caprylate, heptyl isononanoate, octyl isononanoate, ethylhexyl isononanoate, nonyl isononanoate, isononyl isononanoate, decyl isononanoate, 2-propylhexyl isononanoate, dodecyl isononanoate, hexyl caprate, heptyl caprate, octyl caprate, ethylhexyl caprate, nonyl caprate, isononyl caprate, decyl caprate, 2-propylhexyl caprate, dodecyl caprate, pentyl laurate, hexyl laurate, heptyl laurate, octyl laurate, ethylhexyl laurate, nonyl laurate, isononyl laurate, decyl laurate, 2-propylhexyl laurate, dodecyl laurate, propyl myristate, isopropyl myristate, butyl myristate, isobutyl myristate, pentyl myristate, hexyl myristate, heptyl myristate, octyl myristate, ethylhexyl myristate, nonyl myristate, isononyl myristate, decyl myristate, 2-propylhexyl myristate, ethyl palmitate, propyl palmitate, isopropyl palmitate, butyl palmitate, isobutyl palmitate, pentyl palmitate, hexyl palmitate, heptyl palmitate, octyl palmitate, ethylhexyl palmitate, nonyl palmitate, isononyl palmitate, dibutyl adipate, diisobutyl adipate, dipentyl adipate, dihexyl adipate, diheptyl adipate, dioctyl adipate, diethylhexyl adipate, diethyl sebacate, dipropyl sebacate, diisopropyl sebacate, dibutyl sebacate, diisobutyl sebacate, dipentyl sebacate, dihexyl sebacate, triethyl citrate, tripropyl citrate, triisopropyl citrate, tributyl citrate, triisobutyl citrate, triethyl acetylcitrate, tripropyl acetylcitrate or triisopropyl acetylcitrate. Particularly preferred are decyl caprylate, 2-propylhexyl caprylate, dodecyl caprylate, nonyl isononanoate, isononyl isononanoate, decyl isononanoate, 2-propylhexyl isononanoate, dodecyl isononanoate, octyl caprate, ethylhexyl caprate, nonyl caprate, isononyl caprate, decyl caprate, 2-propylhexyl caprate, dodecyl caprate, heptyl laurate, octyl laurate, ethylhexyl laurate, nonyl laurate, isononyl laurate, decyl laurate, 2-propylhexyl laurate, pentyl myristate, hexyl myristate, heptyl myristate, octyl myristate, ethylhexyl myristate, nonyl myristate, isononyl myristate, propyl palmitate, isopropyl palmitate, butyl palmitate, isobutyl palmitate, pentyl palmitate, hexyl palmitate, heptyl palmitate, dipentyl adipate, dihexyl adipate, diheptyl adipate, dipropyl sebacate, diisopropyl sebacate, dibutyl sebacate, diisobutyl sebacate, dipentyl sebacate, triethyl citrate, tripropyl citrate, triisopropyl citrate and triethyl acetylcitrate. More particularly preferred are heptyl laurate, octyl laurate, ethylhexyl laurate, nonyl laurate, isononyl laurate, decyl laurate, 2-propylhexyl laurate, pentyl myristate, hexyl myristate, heptyl myristate, myristic acid octyl, ethylhexyl myristate, nonyl myristate, isononyl myristate, dipentyl adipate, dihexyl adipate, diheptyl adipate, dipropyl sebacate, diisopropyl sebacate, dibutyl sebacate, diisobutyl sebacate, dipentyl sebacate and triethyl acetylcitrate. Still more particularly preferred are pentyl myristate, hexyl myristate, heptyl myristate, octyl myristate, ethylhexyl myristate, dipentyl adipate, dihexyl adipate, diheptyl adipate, dipropyl sebacate, diisopropyl sebacate, dibutyl sebacate, diisobutyl sebacate, dipentyl sebacate or triethyl acetylcitrate. More preferred are dipentyl adipate, dipropyl sebacate, diisopropyl sebacate, dibutyl sebacate, diisobutyl sebacate and/or triethyl acetylcitrate. As the carboxylic acid ester (B), these carboxylic acid esters may be included alone, or two or more thereof may be included.

The resin composition of the present invention includes an insecticide (C) having a saturated vapor pressure of $1.0 \times 10^{-4}$ Pa or more at 25°C. As the insecticide (C), an insecticide may be used alone, or two or more insecticides may be used.

The saturated vapor pressure at 25°C of the insecticide (C) is $1.0 \times 10^{-4}$ Pa or more. When the saturated vapor pressure of the insecticide (C) is less than $1.0 \times 10^{-4}$ Pa, sufficient volatility cannot be obtained, and the insecticidal effect for space is not exhibited. The saturated vapor pressure of the insecticide (C) is preferably $1.0 \times 10^{-3}$ Pa or higher. From the viewpoint of moderately adjusting the volatility and easily extending the effective period, the saturated vapor pressure of the insecticide (C) is preferably 1 Pa or less, more preferably $10^{-1}$ Pa or less, and still more preferably $10^{-2}$ Pa or less.

Examples of the insecticide (C) include pyrethroid insecticides, organophosphorus insecticides, carbamate insecticides, p-menthane-3,8-diol, N,N-diethyl-m-toluamide (DEET), carane-3,4-diol, p-dichlorobenzene, camphor and the like, and pyrethroid insecticides are preferable from the viewpoint of easily enhancing the compatibility with the resin (A) and the carboxylic acid ester (B).

Examples of the pyrethroid insecticide include transfluthrin, metofluthrin, profluthrin, empenthrin, allethrin, furamethrin, prallethrin, resmethrin, phthalthrin, phenothrin, momfluorothrin, heptafluthrin, meperfluthrin and natural pyrethrin. Of these, from the viewpoint of the volatilization rate, at least one insecticide selected from the group consisting of transfluthrin, metofluthrin, empenthrin, profluthrin, meperfluthrin and heptafluthrin is preferable, at least one insecticide selected from the group consisting of transfluthrin, metofluthrin, empenthrin and profluthrin and meperfluthrin is more preferable, at least one insecticide selected from the group consisting of transfluthrin, metofluthrin, empenthrin and profluthrin is still more preferable, and transfluthrin and/or metoflurthrin is/are yet more preferable.

Examples of the organophosphorus insecticide include dichlorvos, trichlorfon, cyanophos, fenitrothion, chlorpyrifos, diazinon, fenthion, malathion, acephate, isoxathion and the like.

Examples of the carbamate insecticide include carbaryl, methomyl and the like.

Examples of other insecticides include p-menthane-3,8-diol, N,N-diethyl-m-toluamide (DEET), carane-3,4-diol, p-dichlorobenzene, camphor and the like.

It is preferable that the saturated vapor pressure (Pb) at 25°C of the carboxylic acid ester (B) and the saturated vapor pressure (Pc) at 25°C of the insecticide (C) included in the resin composition of the present invention satisfy formula (1) below.

$$0.2 \leq Pb/Pc \leq 500 \qquad (1)$$

When formula (1) is satisfied, the insecticide (C) is easily volatilized in particularly high volatilization amount over a long period of time, and it is easy to suppress the occurrence of bleeding on the product surface.

The fact that the saturated vapor pressure (Pb) of the carboxylic acid ester (B) and the saturated vapor pressure (Pc) of the insecticide (C) satisfy the relationship of formula (1) means that volatilization behaviors of these ingredients are very similar to each other. Therefore, it is considered that when the insecticide (C) volatilizes, the carboxylic acid ester (B) simultaneously volatilizes at a rate very close to the volatilization rate of the insecticide (C). As a result, the gradient of the decrease in concentration of the insecticide (C) in the resin composition due to volatilization of the insecticide (C) from the resin composition can be made very gentle, thus making it possible to more easily suppress a decrease in volatilization amount of the insecticide (C) per unit surface area of the product over time.

Pb/Pc in the formula (1) is preferably 0.4, more preferably 0.7 or more, and still more preferably 1.0 or more, and is preferably 100 or less, more preferably 50 or less, and still more preferably 15 or less, from the viewpoint of facilitating volatilization of the insecticide (C) in high volatilization amount over a long period of time and easily suppressing bleeding on the product surface. From similar point of view, the saturated vapor pressure (Pb) of the carboxylic acid ester (B) and the saturated vapor pressure (Pc) of the insecticide (C) preferably satisfy formula (1-1), more preferably formula (1-2), and still more preferably formula (1-3).

$$0.4 \leq Pb/Pc \leq 100 \qquad (1-1)$$

$$0.7 \leq Pb/Pc \leq 50 \qquad (1-2)$$

$$1.0 \leq Pb/Pc \leq 15 \qquad (1-3)$$

When the insecticide (C) and/or carboxylic acid ester (B) included in the resin composition is a mixture of two or more substances, a Pb/Pc value of one of combinations of the insecticide (C) and the carboxylic acid ester (B) included in the mixture, which is closest to the saturation vapor pressure value at least at 25°C, preferably satisfy formula (1). This is because if the carboxylic acid ester (B) having a saturated vapor pressure in a range of Pb/Pc specified in formula (1) exists for any one of the insecticides (C), it is possible to obtain the effect that at least one insecticide (C) can be volatilized in high volatilization amount over a long period of time and bleeding is less likely to occur on the product surface is hardly occurred. From the viewpoint of easily obtaining the effects of high volatilization amount, long-term volatilization and suppression of bleeding for all insecticides (C) included in the mixture, it is preferable to include the carboxylic acid ester (B) having a saturated vapor pressure which satisfies the Pb/Pc relationship specified in formula (1) for all respective insecticides (C).

From the viewpoint of stably retaining the resin (A), the carboxylic acid ester (B) and the insecticide (C) in the resin composition of the present invention and easily suppressing bleeding, the resin (A), the carboxylic acid ester (B) and the insecticide (C) preferably have good compatibility with each other. From the same point of view, each of a solubility index $(R_1)$ of the resin (A) and the carboxylic acid ester (B) included in the resin composition of the present invention, a solubility index $(R_2)$ of the resin (A) and the insecticide (C), and a solubility index $(R_3)$ of the carboxylic acid ester (B) and the insecticide (C) is preferably 5.0 or less, more preferably 4.0 or less, still more preferably 3.0 or less, and yet more preferably 2.0 or less. Note that each of the solubility index $(R_1)$, the solubility index $(R_2)$ and the solubility index $(R_3)$ is calculated by the formulas mentioned below.

As used herein, the solubility parameter distance of the resin (A) to the carboxylic acid ester (B), which is represented by formula (2A) based on the Hansen solubility parameter:

$$R_1 = ((\delta p_A - \delta p_B)^2 + (\delta h_A - \delta h_B)^2)^{1/2} \qquad (2A)$$

where, in formula (2A), $\delta p_A$ represents a polar term in the Hansen solubility parameter of the resin (A), $\delta p_B$ represents a polar term in the Hansen solubility parameter of the carboxylic acid ester (B), $\delta h_A$ represents a hydrogen bond term in the Hansen solubility parameter of the resin (A), and $\delta h_B$ represents a hydrogen bond term in the Hansen solubility parameter of the carboxylic acid ester (B), is referred to as a solubility index $(R_1)$ of the resin (A) and the carboxylic acid ester (B). The closer the dissolution index $(R_1)$ approaches 0, the better the compatibility between the resin (A) and the carboxylic acid ester (B). When the solubility index $(R_1)$ of the resin (A) and the carboxylic acid ester (B) is less than the above upper limit, it is easy to stably retain the plasticizer (B) in the resin composition of the present invention and to suppress bleeding.

As used herein, the solubility parameter distance of the resin (A) to the carboxylic acid ester (C), which is represented by formula (2B) based on the Hansen solubility parameter:

$$R_2 = ((\delta p_A - \delta p_C)^2 + (\delta h_A - \delta h_C)^2)^{1/2} \qquad (2B)$$

where, in formula (2B), $\delta p_A$ represents a polar term in the Hansen solubility parameter of the resin (A), $\delta p_C$ represents a polar term in the Hansen solubility parameter of the insecticide (C), $\delta h_A$ represents a hydrogen bond term in the Hansen solubility parameter of the resin (A), and $\delta h_C$ represents a hydrogen bond term in the Hansen solubility parameter of the insecticide (C), is referred to as solubility index $(R_2)$ of the resin (A) and the insecticide (C). The closer the dissolution index $(R_2)$ approaches 0, the better the compatibility between the resin (A) and the insecticide (C). When the solubility index $(R_2)$ of the resin (A) and the insecticide (C) is less than the above upper limit, it is easy to stably retain insecticide (C) in the resin composition of the present invention, and to suppress bleeding of the insecticide (C) and to increase the volatilization amount of the insecticide (C).

As used herein, the solubility parameter distance of the pesticide (C) to the carboxylic acid ester (B), which is represented by formula (2C) based on the Hansen solubility parameter:

$$R_3 = ((\delta p_C - \delta p_B)^2 + (\delta h_C - \delta h_B)^2)^{1/2} \qquad (2C)$$

where $5pc$, $\delta p_B$, $\delta h_C$ and $\delta h_B$ in formula (2C) are as defined above, is referred to as solubility index $(R_3)$ of the carboxylic acid ester (B) and the insecticide (C). The closer the dissolution index $(R_3)$ approaches 0, the better the compatibility between the carboxylic acid ester (B) and the insecticide (C). When the solubility index $(R_3)$ of the carboxylic acid ester (B) and the insecticide (C) is less than the above upper limit, it is easy to suppress bleeding and to maintain high volatilization amount of the insecticide (C) over a long period of time.

Therefore, the solubility index $(R_1)$, the solubility index $(R_2)$ and the solubility index $(R_3)$ are each represented by formulas (2A) to (2C) based on the Hansen solubility parameter:

$$R_1 = ((\delta p_A - \delta p_B)^2 + (\delta h_A - \delta h_B)^2)^{1/2} \qquad (2A)$$

$$R_2 = ((\delta p_A - \delta p_C)^2 + (\delta h_A - \delta h_C)^2)^{1/2} \qquad (2B)$$

$$R_3 = ((\delta p_C - \delta p_B)^2 + (\delta h_C - \delta h_B)^2)^{1/2} \qquad (2C)$$

where, in formulas (2A) to (2C)

$\delta p_A$ and $\delta h_A$ each represent a polar term and a hydrogen bond term in the Hansen solubility parameter of the resin (A),
$\delta p_B$ and $\delta h_B$ each represent a polar term and a hydrogen bond term in the Hansen solubility parameter of the carboxylic acid ester (B), and
$\delta p_C$ and $\delta h_C$ each represent a polar term and a hydrogen bond term in the Hansen solubility parameter of the insecticide (C).

The Hansen solubility parameter is obtained by dividing the solubility of a substance into three ingredients (dispersion term $\delta d$, polar term $\delta p$, hydrogen bond term $\delta h$) and representing in three-dimensional space. The dispersion term $\delta d$ indicates the effect of a dispersion force, the polar term $\delta p$ indicates the effect of a dipole force, and the hydrogen bond term $\delta h$ indicates the effect of a hydrogen bond force. The definition and calculation of the Hansen solubility parameter is mentioned in Hansen Solubility Parameters: A Users Handbook (CRC Press, 2007), written by Charles M. Hansen. By using computer software Hansen Solubility Parameters in Practice (HSPiP), it is possible to easily estimate the Hansen solubility parameter from the chemical structure of the substance for which no literature values are known. In the present invention, for compounds and monomers registered in the database recorded in HSPiP version 4.1, the values are used, and for compounds and monomers which are not registered, the estimated values utilizing HSPiP version 4.1 is used, thus obtaining $\delta d$, $\delta p$, and $\delta h$.

$\delta p$ or $\delta h$ of the resin (A) is determined as a numerical value obtained by multiplying $\delta p$ or $\delta h$ of the monomer, from which each constituent unit included in the resin (A), is derived, by the content of the constituent unit, and summing the values.

When the resin (A) is a mixture of two or more substances, $\delta p$ of the resin (A) is obtained by multiplying $\delta p$ of each substance contained in the mixture by the content of each substance, and summing the values.

When the resin (A) is a mixture of two or more substances, $\delta h$ of the resin (A) is obtained by multiplying $\delta h$ of each substance contained in the mixture by the content of each substance, and summing the values.

When the carboxylic acid ester (B) is a mixture of two or more substances, $\delta p$ of the carboxylic acid ester (B) is obtained by multiplying $\delta p$ of each substance contained in the mixture by the content of each substance, and summing the values.

When the carboxylic acid ester (B) is a mixture of two or more substances, $\delta h$ of the carboxylic acid ester (B) is obtained by multiplying $\delta h$ of each substance contained in the mixture by the content of each substance, and summing the values.

When the insecticide (C) is a mixture of two or more substances, $\delta p$ of the insecticide (C) is obtained by multiplying $\delta p$ of each substance contained in the mixture by the content of each substance, and summing the values.

When the insecticide (C) is a mixture of two or more substances, $\delta h$ of the insecticide (C) is obtained by multiplying $\delta h$ of each substance contained in the mixture by the content of each substance, and summing the values.

The resin composition of the present invention may further include ingredients other than the resin (A), the carboxylic acid ester (B) and the insecticide (C). Examples of other ingredients include a polymer other than the resin (A), a plasticizer that does not correspond to the carboxylic acid ester (B) (for example, a plasticizer which is not a carboxylic acid ester, a plasticizer having a saturated vapor pressure of less than $1.0 \times 10^{-4}$ Pa at 25°C, etc.) and known additives such as synergists, antioxidants, neutralizers, crosslinking agents, heat stabilizers, weathering stabilizers, pigments, fillers, lubricants or flame retardants. The resin composition of the present invention may include other ingredient alone, or may include two or more other ingredients. The content of the ingredient other than the resin (A), the carboxylic acid ester (B) and the insecticide (C) may be set according to the purposes and is not particularly limited, and is preferably less than 50% by mass, more preferably 30% by mass or less, and still more preferably 10% by mass or less, based on the total amount of the resin composition of the present invention.

The penetration of the resin composition of the present invention may be appropriately adjusted according to the form of use of the resin composition, and is not particularly limited. From the viewpoint of easily increasing the volatilization amount of the active ingredient per surface area of the insecticide (B) and easily enhancing the dimensional stability of a member and a laminate obtained from the resin composition, the penetration is preferably 1 to 600, more preferably 2 to 400, still more preferably 3 to 300, particularly preferably 5 to 250, further particularly preferably 10 to 200, and most preferably 15 to 100.

The penetration is measured using a cylindrical glass container having a diameter of 10 mm and a depth of 40 mm in place of a test container and a constant temperature water bath specified in JIS K2207 in room air maintained at room temperature of 25°C under a load of 50 g according to the penetration test method mentioned in JIS K2207.

There is no particular limitation on the method for producing a resin composition of the present invention. For example, a resin composition can be obtained by mixing a resin (A), a carboxylic acid ester (B), and an insecticide (C), which are raw materials, using mixers such as a Banbury mixer, a super mixer, a kneader, an extruder, a planetary mixer, a butterfly mixer, a dissolver, a roll mill and a mixing tank. The resin composition may be molded into powder, pellets, bulk or the like. A masterbatch obtained by premixing at least part of raw materials of the resin (A), the carboxylic acid ester (B) and the insecticide (C) may be used.

The resin composition may also be produced by molding at least part of the raw materials of the resin (A), the carboxylic acid ester (B) and the insecticide (C) (for example, the resin (A)) into powder, pellets, sheet, bulk or other shape in advance, and contacting the thus obtained molded body with a liquid or gas containing the remaining raw materials (for example, the carboxylic acid ester (B) and/or the insecticide (C)) to impregnate the molded body with the remaining raw materials. Examples of the method for bringing the molded body thus obtained as mentioned above into contact with the liquid include a method of immersing the molded body in the liquid, a method of adding the molded body to the liquid and optionally stirring, a method of applying the liquid and the like.

For example, when the resin composition includes two or more resins (A), the resin (A), the carboxylic acid ester (B) and the insecticide (C) may be mixed at once to obtain a resin composition, or a resin composition may be obtained by mixing one resin (A) with the carboxylic acid ester (B) and/or the insecticide (C) and mixing the thus obtained mixture with the remaining ingredients.

The resin composition of the present invention is used for a sustained release insecticide preparation. The sustained release insecticide preparation is a product which exert an insecticidal effect on a space by volatilizing and diffusing an insecticide in the space. Examples of the form include, but are not particularly limited to, those obtained by molding the resin composition of the present invention alone, those obtained by molding the resin composition of the present invention in combination with other materials, those in which a member using the resin composition of the present invention is installed in a container, a frame, and a device for insecticide volatilization, and the like. The sustained release insecticide preparation in which the resin composition of the present invention is used to maintain mechanical properties required for the product or to impart suitable appearance, is preferably obtained by molding the resin composition of the present invention in combination with other materials, or installing a member using the resin composition of the present invention in a container, a frame or a device for insecticide volatilization, and particularly preferably obtained by installing a member using the resin composition of the present invention in a container, a frame or a device for insecticide volatilization. The sustained release insecticide preparation including the resin composition of the present invention in at least a part thereof is also referred to as sustained release insecticide resin preparation.

The present invention further provides a member for a sustained release insecticide preparation (sustained release insecticide resin preparation) including the resin composition of the present invention mentioned above. The member may be a molded body including the resin composition of the present invention, for example, a molded body obtained by molding the resin composition of the present invention. The member of the present invention can be produced, for example, by molding the resin composition of the present invention by a known molding method such as injection molding, extrusion molding, press molding, slush (powder) molding or the like. The shape of the molded body may be appropriately determined according to the conditions and purposes for use of the molded body, and is not particularly limited. For example, the shape may be rod shape, flat plate shape, mesh shape, round shape, spherical shape, fan shape, triangular shape, etc., or the molded body may be used after being processed into shapes such as net, fiber, non-woven fabric, sheet, film, tube and pellet.

The member of the present invention may be a composite composed of the resin composition of the present invention and other materials. The member can be produced, for example, by combining the resin composition of the present invention with a molded body incompatible with the resin composition of the present invention. When the member of the present invention is a composite as mentioned above, the shape of the molded body constituting the composite may be appropriately selected according to the conditions and purposes for use of the composite, and is not particularly limited. For example, the shape may be rod shape, flat plate shape, mesh shape, round shape, spherical shape, fan shape, triangular shape, etc., or may be shapes such as net, fiber, non-woven fabric, sheet, film, tube and pellet. Examples of the material for the molded body include resins, metals, ceramics, glass, plants and derivatives thereof, animal skins and hairs. Examples of the method of combining the resin composition of the present invention with the molded body include a method of immersing the molded body in the liquid resin composition of the present invention, a method of press-fitting the resin composition of the present invention into the molded body, a method of adding the molded body to the liquid resin composition of the present invention and optionally stirring, a method of coating the molded body with the liquid resin composition of the present invention, a method of applying a sheet-like resin composition of the present invention to the molded body, a method of knitting the molded body with the molded body of the resin composition of the present invention and the like.

The present invention further provides a laminate comprising a first layer (D) containing the resin composition of the present invention mentioned above, and a second layer (E) having the permeability to the carboxylic acid ester (B) and the insecticide (C). The first layer (D) may be either a single layer containing the resin composition of the present invention, or a multilayer layer in which two or more layers containing the resin composition of the present invention are laminated. When the layer (D) is the multilayer, each layer may be the same layer, or may be layers, for example, different in composition and/or thickness. The amount of the resin composition of the present invention contained in the first layer (D) may be appropriately set according to the use of the laminate, and is preferably 50 % by mass or more, more preferably 60% by mass or more, still more preferably 70% by mass or more, and yet more preferably 80% by mass or more, based on the total amount of the first layer (D). Therefore, the amount may be 100% by mass or less. Therefore, the first layer (D) may be a layer made of the resin composition of the present invention. The first layer (D) may be a single layer or a multilayer, and is preferably a single layer from the viewpoint of ease of production of the laminate of the present invention.

The second layer (E) having the permeability to the carboxylic acid ester (B) and the insecticide (C) in the present invention is a layer which satisfies the requirements defined by the following method.

In a moisture permeable cup having a diameter of 60 mm for evaluation of moisture permeability of a moisture-proof packaging material specified in JIS Z 0208, 3 g of a carboxylic acid ester (B) is placed, followed by sealing with a layer (E) in place of a packaging material. The cup is placed in an oven at 40°C, and after the elapse of 24 hours, the weight of the carboxylic acid ester (B) is measured. If there is a weight loss of 0.5 mg or more from the initial amount of the carboxylic acid esters (B), this layer is defined as a layer having the permeability to the carboxylic acid ester (B). Measurement is carried out in the same manner, except for using an insecticide (C) in place of the carboxylic acid ester (B). If the weight of the insecticide (C) is reduced by 0.5 mg or more, this layer is defined as a layer having the permeability to the insecticide (C). The layer satisfying the above conditions for both the carboxylic acid ester (B) and the insecticide (C) is a layer (E) having the permeability to the carboxylic acid ester (B) and the insecticide (C) in the present invention. The value of the weight loss measured as mentioned above is taken as the permeability of the layer used for measurement with respect to each ingredient. The permeability mentioned in Examples of the present specification is the permeability measured by the above method.

Using such a layer (E), when the layer (E) separates the space in which the carboxylic acid ester (B) and the insecticide (C) are present from the space in which they are absent, the carboxylic acid ester (B) and the insecticide (C) move into the space in which the carboxylic acid ester (B) and the insecticide (C) are absent, and thus the carboxylic acid ester (B) and the insecticide (C) are present in both spaces.

The permeability of the layer (E) to the carboxylic acid ester (B) is preferably 0.5 mg or more and 15 mg or less, more preferably 0.5 mg or more and 10 mg or less, still more preferably 1 mg or more and 6 mg or less, and yet more preferably 2 mg or more and 5 mg or less, measured as mentioned above, from the viewpoint of obtaining a preparation with long effective period. From the viewpoint of sufficiently exhibiting the efficacy of the insecticide (C), the permeability of the layer (E) to the insecticide (C) is preferably 1 mg or more and 6 mg or less, and more preferably 2 mg or more and 5 mg or less, measured as mentioned above. The ratio of the permeability (permeability C) of the layer (E) to the insecticide (C) to the permeability (permeability B) of the layer (E) to the carboxylic acid ester (B) (permeability C/permeability B) is preferably 0.5 or more and 3 or less, more preferably 0.8 or more and 2.5 or less, and still more preferably 1 or more and 2 or less, from the viewpoint of balance between the efficacy and the effective period.

The material in layer (E) may be selected to have the desired degree of permeability to the carboxylic acid ester (B) and the insecticide (C) according to the types of the carboxylic acid ester (B) and the insecticide (C) used, and examples thereof include, but are not particularly limited to, polyolefin-based resins such as polyethylene and polypropylene, ethylene copolymer resins such as an ethylene-vinyl acetate copolymer, biodegradable resins such as polylactic acid, vinyl chloride and the like. From the viewpoint of easily obtaining good permeability to the insecticide (C), the layer (E) preferably contains an ethylene copolymer resin and/or a polyolefin resin.

The layer (E) may have through holes to adjust the permeability of the layer (E) to the carboxylic acid ester (B) and the insecticide (C), leading to appropriate modification of the volatilization amount of the carboxylic acid ester (B) and the insecticide (C) which are volatilized through the layer (E). The diameter of the through holes may be adjusted as appropriate, and is preferably 0.1 to 500 um. When the layer (E) has through holes, the plasticizer (B) and the insecticide (C) permeate the layer (E) through the through holes and volatilize as mentioned above. Therefore, it is not necessary for the layer (E) to be composed of a material having the permeability to the plasticizer (B) and the insecticide (C), and the material constituting the layer (E) may be any material including known resin, metal, glass and the like. From the viewpoint of the processability, the material constituting the layer (E) is preferably a thermoplastic resin.

The layer (E) may be a fibrous material such as cloth or paper. Examples of the fibrous material include cellulose fibers, polyethylene fibers, polypropylene fibers, polyethylene terephthalate fibers, metal fibers, animal hairs, and mixtures thereof. These materials may contain binders which connect fibers, fillers which fill gaps between fibers, dyes, pigments, paints and the like for imparting colors and patterns.

The layer (E) may be either a single layer or a multilayer. Examples of the multilayered layer (E) include a laminated paper obtained by coating a paper with a polyolefin-based resin. In this case, in a laminate or the like having, for example, at least a layer constitution of layer (E)/layer (D), a polyolefin-based resin layer of the layer (E), which is a multilayer, may be the surface in contact with the layer (D), or a paper layer may be the surface in contact with the layer (D). A laminate in which the first layer (D) is a single layer, the second layer (E) is a single layer or a multilayer, and one surface of the second layer (E) is in contact with the first layer (D) and the other surface of the second layer (E) is an outermost surface of the laminate, may be either a laminate having a constitution in which a polyolefin-based resin layer of the layer (E), which is a multilayer, is a surface in contact with the layer (D) and a paper layer is an outermost surface of the laminate, or a laminate having a constitution in which a paper layer is the surface in contact with the layer (D) and the polyolefin resin layer is the outermost surface. Preferably, the polyolefin-based resin layer is the surface in contact with the layer (D), and the paper layer is an outermost surface of the laminate.

A laminate comprising a first layer (D) containing the resin composition of the present invention and a second layer (E) having the permeability to the carboxylic acid ester (B) and the insecticide (C) may further comprise a third layer (F) which is different from the layer (E) and the layer (D). Examples of the third layer (F) include at least one layer selected from the group consisting of an adhesive layer, a surface protective layer, a colored layer, an insecticide permeable barrier layer, a design layer and an ultraviolet absorbing layer.

One form of the laminate of the present invention is a laminate comprising a first layer (D) containing the resin composition of the present invention and a second layer (E) having the permeability to the carboxylic acid ester (B) and the insecticide (C). For example, the laminate may be a laminate in which a layer (D) and a layer (E) are laminated in this order, a laminate in which a layer (E), a layer (D) and a layer (E) are laminated in this order, a laminate in which a layer (D), a layer (E) and a layer (D) are laminated in this order, or the like. The laminate in which a layer (E), a layer (D) and a layer (E) are laminated in this order can volatilize the insecticide (C) from both surfaces of the laminate, thus making it possible to supply the insecticide to the space at high volatilization rate. Examples thereof include a laminate having at least a layer constitution of layer (E)/layer (D), a laminate having at least a layer constitution of layer (E)/layer (D)/layer (E), and a laminate having at least a layer constitution of layer (E)/layer D)/layer (E)/layer (D)/layer (E). Here, in the layer constitution of layer (E)/layer (D)/layer (E) and the layer constitution of layer (E)/layer (D)/layer (E)/layer (D)/layer (E), each layer (E) may be the same or different, and each layer (D) may be the same or different. The above layer constitution may further comprise a layer (F).

Another form of the laminate of the present invention is a laminate comprising a first layer (D) made of the resin composition of the present invention, a second layer (E) having the permeability to the carboxylic acid ester (B) and the insecticide (C), and a third layer (F) which may or may not have permeability to the insecticide (C), wherein a layer (E), a layer (D) and a layer (F) are laminated in this order. The laminate laminated in this form enables an improvement in value of the product by changing the volatilization rate of the insecticide (C) from both surfaces of the laminate and imparting a function different from an insecticidal function to the layer (F). For example, the insecticidal effect can be exhibited only on one side of the space separated by the laminate by making the layer (F) of a non-permeable material, or the laminate can be attached to an appropriate surface by making the layer (F) of an adhesive material. The above layer constitution may further comprise a layer (F).

Another form of the laminate of the present invention comprises a first layer (D) made of the resin composition of the present invention and a second layer (E) having the permeability to the plasticizer (B) and the insecticide (C), the layer (D) and the layer (E) being laminated in this order. The laminate laminated in this form enables an improvement in mechanical property of the laminate while ensuring the volatility of the insecticide (C), or can avoid direct contact to the first layer (D) containing the insecticide (C). When the first layer (D) has the adhesiveness, the laminate can be attached to a suitable surface. The above layer constitution may further comprise a layer (F).

In one preferred embodiment, the laminate of the present invention may be a laminate in which the first layer (D) is a single layer, the second layer (E) is a single layer or a multilayer, and one surface of the second layer (E) is in contact with the first layer (D) and the other surface of the second layer (E) is an outermost surface of the laminate. Examples of the laminate include a laminate having a layer constitution of single layer (D)/single layer or multilayer (E) in which the surface of the layer (E) which is not in contact with the layer (D) is an outermost layer of the laminate, and a laminate having a layer constitution of layer (E)/single layer (D)/layer (E) in which the surface which is not in contact with the layer (D) is an outermost layer of the laminate in at least one layer (E) of two layers (E). Examples thereof include a laminate having a layer constitution in which a layer (E) and a single layer (D) is laminated in this order, a laminate having a layer constitution in which a layer (E), a single layer (D) and a layer (F) are laminated in this order, a laminate having a layer constitution in which a layer (E), a single layer (D) and a layer (E) are laminated in this order, and a laminate having a layer constitution in which a layer (E), a single layer (D), a layer (E) and a layer (F) are laminated in this order.

There is no particular limitation on the method for producing a laminate of the present invention. Examples thereof include a method of coating a layer (E) having a shape such as a sheet with the resin composition of the present invention liquefied by heat melting or dissolving in an appropriate solvent, a method of coating a layer (D) having a shape such as a sheet with a composition liquefied by hot melting or dissolving in an appropriate solvent to give layer (E), and when both a composition that forms a layer (D) and a composition that forms a layer (E) have the thermoplasticity, examples thereof include methods of coextrusion, multi-layer injection molding, composite spinning and extrusion lamination of these compositions. Here, when the layer (E) needs to be processed at high temperature, the insecticide (B) contained in the layer (D) may volatilize due to high temperature conditions for processing the layer (E). From the viewpoint of easily preventing volatilization of the insecticide (B), it is preferable to produce a laminate of the present invention by a method of coating either the layer (D) or the layer (E) with the material of the other layer by heat melting or dissolving it in a solvent, or by extrusion-laminating the layer (D) on the layer (E).

[Examples]

Hereinafter, the present invention will be described in more detail by way of Examples and Comparative Examples, but the present invention is not limited to these Examples. "%" and "parts" in Examples and Comparative Examples are "% by mass" and "parts by mass", respectively, unless otherwise specified. Materials used in the Examples are as follows.

<Resin (A)>

In Examples and Comparative Examples, the following resins were used. The resin (X1) is a resin which does not correspond to the resin (A) included in the resin composition of the present invention.

(A1): Ethylene-methyl acrylate copolymer (manufactured by SUMITOMO CHEMICAL COMPANY, LIMITED, ACRYFT (registered trademark), content of methyl acrylate comonomer: 35% by mass, weight-average molecular weight: $4.0 \times 10^4$)
(A2): Ethylene-methyl methacrylate copolymer (manufactured by SUMITOMO CHEMICAL COMPANY, LIMITED, ACRYFT (registered trademark), content of methyl methacrylate comonomer: 25% by mass, weight-average molecular weight: $6.1 \times 10^4$)
(A3): Ethylene-methyl methacrylate copolymer (manufactured by SUMITOMO CHEMICAL COMPANY, LIMITED, ACRYFT (registered trademark), content of methyl methacrylate comonomer: 18% by mass, weight-average molecular weight: $6.4 \times 10^4$)
(A4): Ethylene-vinyl acetate copolymer (manufactured by SUMITOMO CHEMICAL COMPANY, LIMITED, Sumitate, content of vinyl acetate comonomer: 28% by mass)
(X1): Low density polyethylene (manufactured by SUMITOMO CHEMICAL COMPANY, LIMITED, Sumikasen (registered trademark) F101, weight-average molecular weight: $6.1 \times 10^4$)

<Plasticizer (Carboxylic Acid Ester (B))>

In Examples and Comparative Examples, the following carboxylic acid esters or plasticizers were used. The carboxylic acid esters (Y1) and (Y2) do not correspond to the carboxylic acid ester (B) included in the resin composition of the present invention. (Y3) is a plasticizer but not a carboxylic acid ester.

(B1): Diisopropyl sebacate (manufactured by Wako Pure Chemical Industries, Ltd., reagent special grade, molecular weight: 286.4, saturated vapor pressure at 25°C: $6.5 \times 10^{-3}$ Pa)
(B2): Triethyl acetylcitrate (manufactured by Tokyo Chemical Industry Co., Ltd., molecular weight: 318.3, saturated vapor pressure at 25°C: $2.0 \times 10^{-2}$ Pa)
(Y1): Diethyl adipate (manufactured by Tokyo Chemical Industry Co., Ltd., molecular weight: 202.5, saturated vapor pressure at 25°C: 1.2 Pa)
(Y2): Tributyl acetylcitrate (manufactured by Tokyo Chemical Industry Co., Ltd., molecular weight: 402.5, saturated vapor pressure at 25°C: $1.7 \times 10^{-4}$ Pa)
(Y3): Hexadecyl alcohol (manufactured by GODREJ, GINOL16, purity: 98%, molecular weight: 242.4, saturated vapor pressure at 25°C: $8.0 \times 10^{-4}$ Pa (literature value, Daubert, T.E., R P. Danner. Physical and Thermodynamic Properties of Pure Chemicals Data Compilation. Washington, D.C.: Taylor and Francis, 1989.))

<Insecticide>

In Examples and Comparative Examples, the following insecticides were used.

(C1): Metofluthrin (manufactured by SUMITOMO CHEMICAL COMPANY, LIMITED, trade name: Eminence (registered trademark), saturated vapor pressure at 25°C: $1.7 \times 10^{-3}$ Pa)
(C2): Transfluthrin (manufactured by SUMITOMO CHEMICAL COMPANY, LIMITED, trade name: Bayothrin (registered trademark), saturated vapor pressure at 25°C: 3.7 × 10⁻³ Pa)

<Layer (E)>

Examples and Comparative Examples, layers of the following materials having the permeability were used. The permeability of each layer to the insecticide and the plasticizer is shown in Table 1.

(E1): Linear low density polyethylene film (manufactured by SUMITOMO CHEMICAL COMPANY, LIMITED, linear low density polyethylene NOBLEN, grade: inflation molding of FV203)
(E2): Laminated kraft paper (paper obtained by laminating low density polyethylene on kraft paper, basis weight: 60 g/m²)

<Layer (F)>

In Examples and Comparative Examples, layers of the following materials were used. The permeability of the layer (F) to the insecticide and the plasticizer is shown in Table 1.
(F1): Polyethylene terephthalate film (manufactured by Panac Co., Ltd., thickness: 100 um)
Measurement of physical properties and evaluation of performances were carried out in Examples and Comparative Examples according to the following methods.

(1) Saturated Vapor Pressure

The saturated vapor pressure was measured by programmed temperature gas chromatography according to the Donovan method (New method for estimating vapor pressure by the use of gas chromatography: Journal of Chromatography A. 749 (1996) 123-129). For the plasticizer (Y3), although measurement has not been performed by the above method, the literature value or estimated value was shown for reference.

(2) Penetration

The penetration of each composition was measured according to the penetration test method mentioned in JIS K2207. Without using a test container and a constant temperature water bath specified in JIS K2207, the sample was placed in a cylindrical glass container having a diameter of 10 mm and a depth of 40 mm, and then the penetration was measured in room air maintained at room temperature of 25°C under a load of 50 g. The needle penetration was measured three times for samples in the same container, and the average value was taken as the penetration. Each measurement point was selected 3 mm or more away from the peripheral wall of the test container each time, and after the second measurement, a point 3 mm or more away from each penetration position of the previous measurement was selected. When the sample was so flexible that the needle contacted the bottom of the glass container, the penetration was set at 400 based on the depth of the glass container (40 mm). Large penetration means that the composition is soft.

(3) Weight-Average Molecular Weight

Using gel permeation chromatography (GPC method) using a device equipped with a light scattering detector, the polystyrene equivalent weight-average molecular chain length (Aw) of the resin (A) was measured under the following conditions. The baseline on the chromatogram was a straight line formed by connecting a point in a stable horizontal region with a retention time sufficiently shorter than the appearance of the sample elution peak and a point in a stable horizontal region with a retention time sufficiently longer than the observed solvent elution peak.

GPC device: Tosoh HLC-8121GPC/HT
Light scattering detector: Precision Detectors PD2040
Differential pressure viscometer: Viscotek H502
GPC column: Tosoh GMHHR-H(S)HT ×3
Sample solution concentration: 2 mg/mL
Injection volume: 0.3 mL
Measurement temperature: 155°C
Dissolution conditions: at 145°C for 2 hours
Mobile phase: Ortho-dichlorobenzene (0.5 mg/mL of BHT was added)
Elution flow rate: 1 mL/min
Measurement time: about 1 hour

Calibration curve creation method: standard polystyrene was used

The weight-average molecular weight (Mw) of each polymer was calculated from the following formula based on the polystyrene equivalent weight-average molecular chain length (Aw).

$$\text{Molecular weight (Mw) = molecular chain length (Aw)} \times Q$$
$$\text{factor}$$

The Q factor is the value obtained by dividing the molecular weight of a monomer unit of the polymer by the extended chain length of the monomer unit (molecular weight per 1 Å). For each resin (A), the average molecular weight of the monomer constituting the resin is taken as the monomer unit molecular weight, and the ideal carbon spacing of 2.52 Å for every other C-C trans bond extended chain in polyethylene was calculated as the monomer unit extended chain length.

(4) Fabrication of Resin Composition and Sample for Measurement of Sustained Release Amount

A resin (A), a carboxylic acid ester (B) and an insecticide (C) were kneaded in a laboplast mill (manufactured by TOYO SEIKI SEISAKU-SHO, LTD., Model 65C150) or a small tabletop kneader (manufactured by DSM, Xplore, 15cc twin-screw micro compounder) at a rotational speed of 80 rpm and a chamber temperature of 70°C for 15 minutes to prepare the resin composition.

The resin composition thus obtained was press-molded at 70°C under a pressure of 20 MPa to obtain a sheet-like molded body (layer (D)) of 50 mm long × 150 mm wide × 0.15 mm thick. Next, a layer made of a linear low density polyethylene film (E1) or a laminated kraft paper (E2) having a resin surface subjected to a corona treatment (layer (E)) was applied on both surfaces of the layer (D) so that the corona-treated surface is in contact with the layer (D) to obtain a laminate. The end face of the laminate thus obtained was heat-sealed so that the layer (D) was not exposed, thus obtaining a sample.

(5) Method for Measurement of Sustained Release Rate

(5-1) Standing conditions

Five samples were fabricated by the method mentioned in (4). Each sample was left to stand in a test room for 3 days, 7 days, 14 days, 21 days and 42 days under the conditions of 30°C and a wind speed of 0.5 m/s.

(5-2) Sustained Release Ratio (Qb and Qc) and Sustained Release Mass (Rb and Rc)

The amount of mass decrease [g] of each sample was determined from a difference in mass between the sample before standing and the sample after standing. The amount of mass decrease determined in this way was taken as the total sustained release mass Rt of the carboxylic acid ester (B) and the insecticide (C).

Next, each sample after being left to stand for a predetermined number of days was immersed in 50 mL of methanol at room temperature for 24 hours to obtain an extraction solution containing ingredients extracted from each sample with methanol. The resulting extracted solution was separated and quantified using a gas chromatography-flame ionization detector (GC-FID) (GC2010, manufactured by Shimadzu Corporation), and the residual amount Mb [g] of the carboxylic acid ester (B) and the residual amount Mc [g] of the insecticide (C) existing in each sample after standing were measured. Thereafter, the sustained release ratio Qb of the carboxylic acid ester (B) was determined by the following formula (3A), and the sustained release ratio Qc of the insecticide (C) was determined by the following formula (3B). The sustained release mass Rb of the carboxylic acid ester (B) was determined by the formula (4A), and the sustained release mass Rc of the insecticide (C) was determined by the formula (4B). The sustained release ratio (Qb and Qc) is the ratio of the amount of each sustainedly released ingredient to the total amount of the sustainedly released ingredients. The sustained release mass (Rb and Rc) corresponds to the mass of each sustained release ingredient:

$$Qb = (Wb - Mb)/(Wb - Mb + Wc - Mc) \qquad (3A)$$

$$Qc = (Wc - Mc)/(Wb - Mb + Wc - Mc) \qquad (3B)$$

where, in formula (3A) and formula (3B), Wb represents the content [g] of the carboxylic acid ester (B) in the sample before standing, and Wc represents the content [g] of the insecticide (C) in the sample before standing.

$$Rb = Rt \times Qb \qquad (4A)$$

$$Rc = Rt \times Qc \qquad (4B)$$

(5-3) Sustained Release Amount

Next, the ratio (Rb/Wb × 100) [% by mass] of the sustained release mass (Rb) of the carboxylic acid ester (B) to the content (Wb) of the carboxylic acid ester (B) in the sample before standing was calculated and taken as the sustained release amount of the carboxylic acid ester (B). Similarly, the ratio of the sustained release mass (Rc) of the insecticide (C) to the content (Wc) of the insecticide (C) in the sample before standing (Rc/Wc × 100) [% by mass] was taken as the sustained release amount of the insecticide (C) .

(5-4) Sustained Release Amount of Insecticide (C) Except During Collection

The total sustained release mass Rt' was measured at regular intervals except during collection, and the sustained release mass Qc' of the insecticide (C) was determined by the following formula (5). The sustained release mass Rc' of the insecticide (C) to the content of the insecticide (C) included in the sample before standing was taken as the sustained release amount of the insecticide (C) except during collection:

$$Qc' = Rt' \times (Qcc + (D - Dc)/(Da - Dc) \times (Qca - Qcc)) \qquad (5)$$

where, in formula (5),

D represents the number of standing days during measurement of the total sustained release mass Rt',
Dc represents the number of days the sample was collected immediately before D,
Da represents the number of days the sample was collected immediately after D,
Qcc represents the sustained release ratio Qc of the insecticide (C) of the sample collected immediately after D, and
Qca represents the sustained release ratio Qc of the insecticide (C) of the sample collected immediately after D.

(6) Maximum Sustained Release Rate Ratio

The sustained release rate of the insecticide per day [mg/day] was calculated for each of the following periods: From the start of measurement to 3rd day (period I), from 4th day to 7th day (period II), from 8th day to 14th day (period III) and from 15th day to 21st day (period IV). Specifically, for example, the sustained release rate of the insecticide per day in period II was calculated by formula (sustained release mass of the insecticide on 7th day - sustained release mass of the insecticide on 4th day)/(7-4). The ratio of the maximum sustained release rate to the minimum sustained release rate (maximum sustained release rate/minimum sustained release rate) of the sustained release rate of the insecticide per day in each period was taken as the maximum sustained release rate ratio.

(7) Evaluation of Sustained Release Property

From the sustained release mass measured by the method mentioned in (5) and the maximum sustained release rate ratio measured by the method mentioned in (6), the sustained release property of each sample was evaluated according to the following criteria. It should be noted that the evaluation results of A and B were regarded as acceptable.

[Evaluation Criteria for Sustained Release]

A: Samples in which the sustained release mass of the insecticide (C) per day in each of the following periods: from the start of the test to 3rd day (period I), from 4th day to 7th day (period II), from 8th day to 14th day (period III) and from 15th day to 21st day (period IV) is 2 mg or more and the maximum sustained release rate ratio is within 0.6 to 1.7 times. In this case, it is considered that high and uniform insecticidal effect is exhibited for at least 21 days, and the rate of a decrease in concentration of the insecticide (C) in the resin composition is low, so that the efficacy is expected to be exhibited over a longer period of time.

B: Of the samples which do not meet the criteria of A, the sustained release mass of the insecticide (C) per day in each of the above periods is 1.5 mg or more, and the maximum sustained release rate ratio is within 0.4 to 2.3 times. In this case, it is considered that uniform insecticidal effect is exhibited for at least 21 days, and the rate of decrease in the concentration of the insecticide (C) in the resin composition is low to some extent. Although it does not reach the level of A, the efficacy is expected to be exhibited over sufficiently longer period of time.

C: Of the samples which do not meet the criteria of A and B, the sustained release mass of the insecticide (C) per day is 1.5 mg or more in any of the above periods. In this case, it is considered that the insecticidal effect is exhibited for a limited period of time, but the effect cannot be maintained over a long period of time since the rate of decrease in concentration of the insecticide (C) cannot be suppressed.

D: Samples which does not meet the criteria of A, B and C.

It is considered that samples show low sustained release mass and low efficacy as the insecticide, or even if the efficacy is exhibited, the period is short or unstable.

(8) Method for Measurement of Active Ingredient Concentration Retention Ratio

The concentration of the active ingredient (insecticide) in the resin composition in each sample left to stand under the conditions mentioned in (5) was determined by the following formula (6):

$$\text{Active ingredient concentration [\% by weight]} = \{(W_c - R_c)/(W_t - R_t)\} \times 100 \qquad (6)$$

where, in formula (6),

$W_c$ represents the amount [g] of the insecticide (C) added to the sample before standing,
$R_c$ represents the sustained release mass [g] of the insecticide (C),
$W_t$ represents the mass [g] of the resin composition in the sample before standing, and
$R_t$ represents the toral sustained release mass of the carboxylic acid ester (B) and the insecticide (C). In the above formula, $(W_c - R_c)$ represents the mass of the active ingredient included in the resin composition after a specific standing period, and $(W_t - R_t)$ represents the mass of the resin composition after a specific standing period.

From the active ingredient concentration calculated as mentioned above, the retention rate of the active ingredient concentration was measured by the following formula (7):

$$\text{Active ingredient concentration retention rate [\%]} = [(\text{active ingredient concentration according to formula (6))}/\{(W_c/W_t) \times 100\}] \times 100 \qquad (7)$$

In the above formula, $(W_c/W_t) \times 100$ represents the active ingredient concentration in the resin composition in the sample before standing.

(9) Evaluation of Bleeding

With respect to the laminates including the resin compositions of Examples and Comparative Examples, the samples before and after the evaluation of measurement of the sustained release amount (standing period of 21 days) were visually observed, and the degree of bleeding was evaluated according to the following evaluation criteria. It should be noted that the evaluation results of A to C were regarded as acceptable.

[Evaluation Criteria for Bleeding]

A: There is no bleeding from the laminate before and after the evaluation, and the composition remains uniform surface before evaluation.

B: No bleeding can be observed when touching the laminate surface before and after evaluation, but discoloration due to soaking of the active ingredients into the (E) layer can be observed.

C: There is no bleeding from the laminate surface before evaluation, but there is slight bleeding which can be seen when touching the laminate surface after evaluation, or the resin composition is observed to be separated into two or more layers inside the laminate.

D: There is no bleeding from the laminate surface before evaluation, but bleeding such as droplets or crystals can be clearly seen visually after evaluation.

E: Bleeding is visible or discernible when touching the surface the laminate before evaluation after fabrication of the sample.

(Example 1)

According to the formulation shown in Table 2, (A1), (B1) and (C1) were kneaded by the method mentioned in (4) to obtain a resin composition. Using the resin composition, a layer (D) was fabricated and a layer (E1) was laminated on both surfaces of the layer (D) to fabricate a sample (laminate).

(Example 2)

In the same manner as in Example 1, except that each ratio of (A1), (B1) and (C1) was set according to the formulation shown in Table 2, a resin composition was obtained by the method mentioned in (4). Using the resin composition, a layer (D) was fabricated and a layer (E1) was laminated on both surfaces of the layer (D) to fabricate a sample (laminate).

(Example 3)

According to the formulation shown in Table 2, (A1), (B1) and (C2) were kneaded by the method mentioned in (4) to obtain a resin composition. Using the resin composition, a layer (D) was fabricated and a layer (E1) was laminated on both surfaces of the layer (D) to fabricate a sample.

(Example 4)

According to the formulation shown in Table 2, (A1), (B2) and (C1) were kneaded by the method mentioned in (4) to obtain a resin composition. Using the resin composition, a layer (D) was fabricated and a layer (E1) was laminated on both surfaces of the layer (D) to fabricate a sample.

(Example 5)

According to the formulation shown in Table 2, (A4), (B1) and (C1) were kneaded in the same manner as in (4), except that the kneading temperature was set at 90°C, a resin composition was obtained. Using the resin composition, a layer (D) was fabricated and a layer (E1) was laminated on both surfaces of the layer (D) to fabricate a sample.

(Example 6)

According to the formulation shown in Table 2, (A4), (B1) and (C2) were kneaded in the same manner as in (4), except that the kneading temperature was set at 90°C, a resin composition was obtained. Using the resin composition, a layer (D) was fabricated and a layer (E1) was laminated on both surfaces of the layer (D) to fabricate a sample.

(Example 7)

According to the formulation shown in Table 2, (A3), (B1) and (C2) were kneaded in the same manner as in (4), except that the kneading temperature was set at 90°C, a resin composition was obtained. Using the resin composition, a layer (D) was fabricated and a layer (E1) was laminated on both surfaces of the layer (D) to fabricate a sample.

(Example 8)

According to the formulation shown in Table 2, (A2), (X1), (B2) and (C1) were kneaded in the same manner as in (4), except that the kneading temperature was set at 130°C, a resin composition was obtained. Using the resin composition, a layer (D) was fabricated and a layer (E1) was laminated on both surfaces of the layer (D) to fabricate a sample.

(Example 9)

According to the formulation shown in Table 2, (A1), (B1) and (C1) were kneaded by the method mentioned in (4) to obtain a resin composition. Using the resin composition, a layer (D) was fabricated and a layer (E2) was laminated on both surfaces of the layer (D) to fabricate a sample.

(Comparative Example 1)

According to the formulation shown in Table 2, (A2), (X1) and (C1) were kneaded in the same manner as in (4), except that the kneading temperature was set at 130°C, a resin composition was obtained. Using the resin composition, a layer (D) was fabricated and a layer (E1) was laminated on both surfaces of the layer (D) to fabricate a sample.

(Comparative Example 2)

According to the formulation shown in Table 2, (A3) and (C2) were kneaded in the same manner as mentioned in (4), except that the kneading temperature was set at 90°C, a resin composition was obtained. Using the resin composition, a layer (D) was fabricated and a layer (E1) was laminated on both surfaces of the layer (D) to fabricate a sample.

(Comparative Example 3)

According to the formulation shown in Table 2, (A1), (Y1) and (C1) were kneaded by the method mentioned in (4) to obtain a resin composition. Using the resin composition, a layer (D) was fabricated and a layer (E1) was laminated on both surfaces of the layer (D) to fabricate a sample.

(Comparative Example 4)

According to the formulation shown in Table 2, (A1), (Y2) and (C1) were kneaded by the method mentioned in (4) to obtain a resin composition. Using the resin composition, a layer (D) was fabricated and a layer (E1) was laminated on both surfaces of the layer (D) to fabricate a sample.

(Comparative Example 5)

According to the formulation shown in Table 2, (A1), (Y3) and (C1) were kneaded by the method mentioned in (4) to obtain a resin composition. Using the resin composition, a layer (D) was fabricated and a layer (E1) was laminated on both surfaces of the layer (D) to fabricate a sample.

(Comparative Example 6)

According to the formulation shown in Table 2, (A1), (B1) and (C1) were kneaded by the method mentioned in (4) to obtain a resin composition. Using the resin composition, a layer (D) was fabricated and a layer (E1) was laminated on both surfaces of the layer (D) to fabricate a sample.

(Comparative Example 7)

According to the formulation shown in Table 2, (A1), (B1) and (C1) were kneaded by the method mentioned in (4) to obtain a resin composition. Using the resin composition, a layer (D) was fabricated and a layer (E1) was laminated on both surfaces of the layer (D) to fabricate a sample.

The saturated vapor pressure (Pb) at 25°C of the carboxylic acid ester or plasticizer and the saturated vapor pressure (Pc) at 25°C of the insecticide (C) used in Examples and Comparative Examples were measured by the method mentioned in (1) Saturated Vapor Pressure and the ratio Pb/Pc was calculated. The solubility index between ingredients R ($R_1$ to $R_3$) between the resin, the carboxylic acid ester or plasticizer and the insecticide used in Examples and Comparative Examples was calculated from formulas (2A) to (2C) based on the Hansen solubility parameter. The penetration of the resin compositions obtained in Examples and Comparative Examples was measured by the method mentioned in (2) Penetration. The results thus obtained are shown in Tale 2.

With respect to the samples (laminates) for the measurement of the sustained release amount obtained in Examples and Comparative Examples, the sustained release property was evaluated according to the method mentioned in (7) Evaluation of Sustained Release Property from the sustained release mass measured by the method mentioned in (5) Method for Measurement of Sustained Release Amount and the maximum sustained release rate ratio measured by the method mentioned in (6). Bleeding was also evaluated according to the method mentioned in (9) Evaluation of Bleeding. The results thus obtained are shown in Table 3.

With respect to the samples (laminates) for measurement of sustained release amount obtained in Examples and Comparative Examples, the sustained release mass ($R_c$) of the insecticide (C) after being left to stand for a predetermined period according to (5) Method for Measurement of Sustained Release Amount. The results thus obtained are shown in Table 3.

The maximum sustained release rate ratio of the insecticide (C) was also calculated according to (6) Maximum Sustained Release Rate Ratio. The results thus obtained are shown in Table 3.

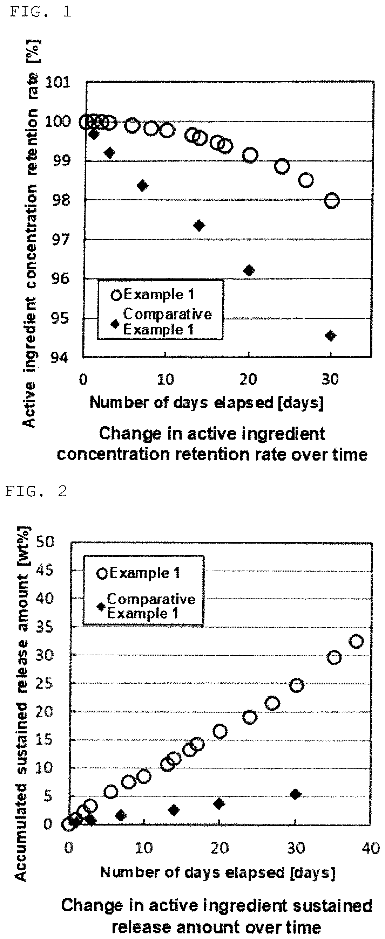

With respect to the samples (laminates) obtained in Example 1 and Comparative Example 1, the active ingredient concentration retention rate was measured according to the method mentioned in (8) Method For Measurement of Active Ingredient Concentration Retention Rate. The results thus obtained are shown in FIG. 1.

With respect to the samples (laminates) obtained in Example 1 and Comparative Example 1, the sustained release amount of the active ingredient was measured according to the method mentioned in (5-3) Sustained Release Amount and (5-4) Sustained Release Amount of Insecticide (C) except during collection, and then a change over time was confirmed. The results thus obtained are shown in FIG. 2.

[Table 1]

| Layer material | Permeability of each permeable ingredient [mg] | | | | | | |
|---|---|---|---|---|---|---|---|
| | (B1) | (B2) | (Y1) | (Y2) | (Y3) | (C1) | (C2) |
| (E1) | 2.4 | 1.9 | 40 | 0.7 | 0.3 | 4.1 | 3.1 |
| (E2) | 7.9 | 1.8 | 30 | 0.7 | 0.0 | 3.9 | 3.7 |
| (F1) | 0.2 | 0.2 | 0.2 | 0.2 | 0.0 | 0.0 | 0.2 |

[Table 2]

| | | | Formulation [parts by mass] | | | Layer E material | Pb/Pc | Solubility index between ingredients R | | | Penetration |
|---|---|---|---|---|---|---|---|---|---|---|---|
| | | | (A) | (B) | (C) | | | $R_1$ | $R_2$ | $R_3$ | |
| Example | | 1 | (A1) 50 | (B1) 20 | (C1) 30 | (E1) | 3.8 | 1.6 | 2.0 | 0.9 | 41 |
| | | 2 | (A1) 30 | (B1) 20 | (c1) 50 | (E1) | 3.8 | 1.6 | 2.0 | 0.9 | 250 |
| | | 3 | (A1) 50 | (B1) 20 | (C2) 30 | (E1) | 1.8 | 1.6 | 1.7 | 1.0 | 46 |
| | | 4 | (A1) 40 | (B2) 10 | (C1) 40 | (E1) | 12 | 2.0 | 2.0 | 4.1 | 180 |
| | | 5 | (A4) 50 | (B1) 20 | (C1) 30 | (E1) | 3.8 | 2.3 | 2.6 | 0.9 | 6.9 |
| | | 6 | (A4) 50 | (B1) 20 | (C2) 30 | (E1) | 1.8 | 2.3 | 2.3 | 1.0 | 3.5 |
| | | 7 | (A3) 70 | (B1) 15 | (C2) 15 | (E1) | 1.8 | 3.6 | 3.8 | 1.0 | 2.3 |
| | | 8 | (A2) 72 (X1) 89 | (B1) 9 | (C1) 19 | (E1) | 3.8 | 2.5 | 3.4 | 0.9 | 3.8 |
| | | 9 | (A1) 50 | (B1) 20 | (C1) 30 | (E2) | 3.8 | 1.6 | 2.0 | 0.9 | 41 |
| Comparative Example | | 1 | (A2) 50 (X1) 67 | - | (C1) 50 | (E1) | - | - | 3.4 | - | 0.5 |
| | | 2 | (A3) 70 | - | (C2) 30 | (E1) | - | - | 3.8 | - | 1.1 |
| | | 3 | (A1) 30 | (Y1) 20 | (C1) 50 | (E1) | 706 | 4.5 | 2.0 | 3.0 | 230 |
| | | 4 | (A1) 30 | (Y2) 20 | (C1) 50 | (E1) | 0.1 | 2.0 | 2.0 | 1.4 | 240 |
| | | 5 | (A1) 30 | (Y3) 20 | (C1) 50 | (E1) | 0.5 | 5.6 | 2.0 | 5.1 | 75 |
| | | 6 | (A1) 45 | (B1) 5 | (C1) 50 | (E1) | 3.8 | 1.6 | 2.0 | 0.9 | 36 |
| | | 7 | (A1) 8 | (B1) 20 | (C1) 72 | (E1) | 3.8 | 1.6 | 2.0 | 0.9 | 400 |

[Table 3]

| | | Sustained release property | Bleeding | Sustained release mass [mg] | | | | Maximum sustained release rate ratio |
|---|---|---|---|---|---|---|---|---|
| | | | | 3rd day | 7th day | 14th day | 21st day | |
| Example | 1 | A | A | 11.8 | 35.9 | 63.6 | 90.1 | 1.6 |
| | 2 | A | A | 14.5 | 42.2 | 80.3 | 113.5 | 1.5 |
| | 3 | A | A | 20.1 | 51.2 | 97.9 | 132.6 | 1.6 |
| | 4 | B | A | 17.3 | 40.1 | 62.4 | 81.1 | 2.2 |
| | 5 | A | C | 9.7 | 36.1 | 57.2 | 85.1 | 2.2 |
| | 6 | A | C | 20.1 | 52.0 | 85.2 | 120.0 | 1.7 |
| | 7 | B | C | 5.9 | 20.5 | 48.7 | 68.1 | 2.0 |
| | 8 | B | A | 4.6 | 11.5 | 26.6 | 41.0 | 1.4 |
| | 9 | A | B | 12.2 | 34.9 | 61.3 | 87.3 | 1.5 |
| Comparative Example | 1 | D | D | 3.5 | 6.8 | 10.8 | 16.0 | 2.0 |
| | 2 | C | C | 15.5 | 26.0 | 43.7 | 58.5 | 2.4 |
| | 3 | C | A | 8.8 | 38.3 | 66.2 | 89.1 | 2.5 |
| | 4 | C | A | 24.4 | 50.9 | 83.7 | 107.2 | 2.4 |
| | 5 | B | E | 19.0 | 46.8 | 77.1 | 98.5 | 2.3 |
| | 6 | C | A | 18.3 | 39.6 | 66.6 | 81.4 | 2.5 |
| | 7 | C | E | 32.1 | 71.8 | 114.0 | 140.5 | 2.8 |

The samples of Examples 1 to 9 showed good evaluation results of the sustained release property and were capable of volatilizing the active ingredient in high volatilization amount over a long period of time, and also showed good evaluation results of bleeding and were less likely to cause bleeding. To the contrary, the samples mentioned in Comparative Examples 1 to 7 were not capable of volatilizing the active ingredient in high volatilization amount over a long period of time, and also showed insufficient evaluation results of the sustained release property and were likely to cause bleeding.

The samples of Examples 1 to 3 (especially the sample of Example 1) maintained the concentration of the insecticide (C) in the resin composition over a long period of time, and sustainedly released the insecticide (C) stably in high sustained release amount over a long period of time.

The sample mentioned in Example 4 tended to cause a decrease in sustained release amount of the plasticizer (B) as compared with Examples 1 to 3, but sustainedly released the insecticide (C) stably in high sustained release amount.

The samples mentioned in Examples 5 and 6 maintained the concentration of the insecticide (C) in the resin composition over a long period of time and sustainedly released the insecticide (C) stably in high sustained release amount over a long period of time. When the surface of the samples was wiped off after evaluation of the sustained release amount, liquid bleeding was slightly observed, but the level was not problematic.

In the samples of Examples 7 and 8, although the sustained release amount was lower than that of Examples 1 to 3, the insecticide (C) was sustainedly released stably in high sustained release amount. When the surface of the sample after the evaluation of the sustained release amount was wiped off, liquid bleeding was slightly observed in the sample of Example 7, but the level was not problematic, and no liquid bleeding was observed on the surface of the sample of Example 8.

The sample of Example 9 sustainedly released the insecticide (C) stably in high sustained release amount over a long period of time. Although discoloration due to soaking of liquid into the paper of layer (E) was observed, no bleeding was observed on the surface of the sample after evaluation of the sustained release amount.

In the sample of Comparative Example 1, the concentration of the insecticide (C) in the resin composition decreased over time, leading to small sustained release amount of the insecticide (C). Droplet-liked bleeding was visibly generated on the surface of the sample after completion of the evaluation of the sustained release amount.

In the sample of Comparative Example 2, the sustained release amount of the insecticide (C) gradually decreased. When the surface of the sample was wiped off after evaluation of the sustained release amount, liquid bleed was slightly observed.

The sample of Comparative Example 3 released all of the plasticizer (B) at an early stage. Thereafter, the sustained release amount of the insecticide (C) gradually decreased.

The sample of Comparative Example 4 scarcely released the plasticizer (B). Thereafter, the sustained release amount of the insecticide (C) gradually decreased.

The sample of Comparative Example 5 showed small sustained release amount of the plasticizer (B) and was not stable. The sample sustainedly released the insecticide (C) stably. Layer separation was observed in the resin composition before evaluation of the sustained release amount, and solid bleed was visibly generated on the surface of the sample after completion of evaluation.

The sample of Comparative Example 6 showed small sustained release amount of the plasticizer (B) and was not stable. The sustained release amount of the insecticide (C) gradually decreased.

The sample of Comparative Example 7 sustainedly released the insecticide (C) greatly at the beginning, and then the sustained release amount slightly decreased. The liquid separated from the resin composition before the start of the evaluation of the sustained release amount and the surface of the sample was sticky, and after completion of the evaluation, clear droplet-like bleeding was confirmed.

### Claims

1. A resin composition comprising at least a resin (A), which is a copolymer of ethylene and a vinyl-based monomer containing an oxygen atom, a linear or branched carboxylic acid ester (B) having a molecular weight of 255 to 380 and a saturated vapor pressure of $1.0 \times 10^{-4}$ Pa or more at 25°C, and an insecticide (C) having a saturated vapor pressure of $1.0 \times 10^{-4}$ Pa or more at 25°C, wherein the amount of the resin (A) is 10 to 87% by mass, the amount of the carboxylic acid ester (B) is 3 to 30% by mass, and the amount of the insecticide (C) is 10 to 60% by mass, based on the total amount of the resin composition, and the mass ratio of the carboxylic acid ester (B) to the insecticide (C) is 2:1 to 1:5.

2. The resin composition according to claim 1, wherein the resin (A) is a copolymer of ethylene and an organic carboxylic acid derivative having an ethylenically unsaturated bond.

3. The resin composition according to claim 1 or 2, wherein the carboxylic acid ester (B) is at least one ingredient selected from the group consisting of an ester of a saturated fatty acid having 8 to 20 carbon atoms, an ester of a dicarboxylic acid having 2 to 8 carbon atoms, a carbonic acid ester, a citric acid ester and an acetylcitric acid ester.

4. The resin composition according to any one of claims 1 to 3, wherein the insecticide (C) is a pyrethroid insecticide.

5. The resin composition according to claim 4, wherein the insecticide (C) is at least one ingredient selected from the group consisting of transfluthrin, metofluthrin, empenthrin, profluthrin, meperfluthrin and heptafluthrin.

6. The resin composition according to any one of claims 1 to 5, wherein the saturated vapor pressure (Pb) at 25°C of the carboxylic acid ester (B) and the saturated vapor pressure (Pc) at 25°C of the insecticide (C) satisfy formula (1) below.

$$0.2 \leq Pb/Pc \leq 500 \qquad (1)$$

7. The resin composition according to any one of claims 1 to 6, wherein a solubility index ($R_1$) of the resin (A) and the carboxylic acid ester (B), a solubility index ($R_2$) of the resin (A) and insecticide (C), and a solubility index ($R_3$) of the carboxylic acid ester (B) and the insecticide (C) are all 5.0 or less.

8. A member for a sustained release insecticide preparation, comprising the resin composition according to any one of claims 1 to 7.

9. A laminate comprising a first layer (D) containing the resin composition according to any one of claims 1 to 7, and a second layer (E) having the permeability to the carboxylic acid ester (B) and the insecticide (C).

10. The laminate according to claim 9, wherein the first layer (D) is a single layer, the second layer (E) is a single layer or a multilayer, and one surface of the second layer (E) is in contact with the first layer (D) and the other surface of the second layer (E) is an outermost surface of the laminate.

11. The laminate according to claim 9 or 10, which has at least layer constitution of layer (E)/layer (D)/layer (E), wherein each layer (E) may be the same or different from each other.

12. The laminate according to any one of claims 9 to 11, further comprising a third layer (F) which is different from the layer (E) and the layer (D).

13. The laminate according to claim 12, wherein the third layer (F) is at least one layer selected from the group consisting of an adhesive layer, a surface protective layer, a colored layer, an insecticide permeable barrier layer, a design layer and an ultraviolet absorbing layer.

14. A sustained release insecticide preparation comprising the member according to claim 8 and/or the laminate according to any one of claims 9 to 13.

FIG. 1

Change in active ingredient
concentration retention rate over time

FIG. 2

Change in active ingredient sustained
release amount over time

## INTERNATIONAL SEARCH REPORT

| International application No. |
| --- |
| **PCT/JP2021/047682** |

**A. CLASSIFICATION OF SUBJECT MATTER**

*A01M 1/20*(2006.01)i; *B32B 27/18*(2006.01)i; *B32B 27/32*(2006.01)i; *A01P 7/04*(2006.01)i; *C08K 5/10*(2006.01)i; *C08L 23/08*(2006.01)i; *A01N 53/06*(2006.01)i; *A01N 25/10*(2006.01)i

FI: C08L23/08; C08K5/10; B32B27/18 F; B32B27/32 101; A01N53/06 110; A01N25/10; A01P7/04; A01M1/20 C

According to International Patent Classification (IPC) or to both national classification and IPC

**B. FIELDS SEARCHED**

Minimum documentation searched (classification system followed by classification symbols)

A01N1/00-65/48; A01P1/00-23/00; C08K3/00-13/08; C08L1/00-101/14; A01M1/20; B32B27/18; B32B27/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2013/073571 A1 (DAINIPPON JOCHUGIKU CO., LTD.) 23 May 2013 (2013-05-23) claims 1-13, examples | 1-14 |
| A | JP 2006-182817 A (SYMRISE KK) 13 July 2006 (2006-07-13) claims 1-12, examples | 1-14 |
| A | JP 2001-031502 A (EARTH CHEM CORP LTD) 06 February 2001 (2001-02-06) comparative example 3 | 1-14 |
| A | JP 09-077908 A (SUMITOMO CHEMICAL CO) 25 March 1997 (1997-03-25) claims 1-20, examples | 1-14 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 February 2022** | **08 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/047682**

| Patent document cited in search report | | | Publication date (day/month/year) | Patent family member(s) | | | Publication date (day/month/year) |
|---|---|---|---|---|---|---|---|
| WO | 2013/073571 | A1 | 23 May 2013 | EP | 2781154 | A1 | |
| | | | | claims 1-13, examples | | | |
| | | | | CN | 103781351 | A | |
| | | | | KR | 10-2014-0098132 | A | |
| | | | | TW | 201325453 | A | |
| JP | 2006-182817 | A | 13 July 2006 | (Family: none) | | | |
| JP | 2001-031502 | A | 06 February 2001 | (Family: none) | | | |
| JP | 09-077908 | A | 25 March 1997 | US | 5948832 | A | |
| | | | | claims 1-18, examples | | | |
| | | | | EP | 763325 | A1 | |
| | | | | CN | 1157837 | A | |
| | | | | KR | 10-1997-0006391 | A | |

Form PCT/ISA/210 (patent family annex) (January 2015)

**EP 4 285 719 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011149000 A
- JP 2005320550 A

### Non-patent literature cited in the description

- Hansen solubility parameter is mentioned. **CHARLES M. HANSEN.** Hansen Solubility Parameters: A Users Handbook. CRC Press, 2007
- **DAUBERT, T.E. ; R P. DANNER.** Physical and Thermodynamic Properties of Pure Chemicals Data Compilation. Taylor and Francis, 1989
- New method for estimating vapor pressure by the use of gas chromatography. *Journal of Chromatography A.,* 1996, vol. 749, 123-129